# EUROPEAN PATENT APPLICATION

(11) **EP 4 804 698 A1**
(43) Date of publication of application: **09.09.2026**
(21) Application number: 23957277.9
(22) Date of filing: 02.11.2023
(51) Int. Cl.: H04W 72/543

(54) **COMMUNICATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/129426
(87) International publication number: WO 2025/091407

(57) **Abstract**

Provided in the present disclosure are a communication method, apparatus and device, and a storage medium. The method comprises: sending a first request, wherein the first request is used for requesting session resources for a first service, and the first request comprises at least one of the following: first information used for indicating a first quality of service (QoS) profile which corresponds to a protocol data unit (PDU), second information used for indicating a second QoS profile which corresponds to a PDU set, a first indication, at least one first alternative QoS profile, third information used for indicating the priority of the at least one first alternative QoS profile, at least one second alternative QoS profile, and fourth information used for indicating the priority of the at least one second alternative QoS profile, the first alternative QoS profile being used for replacing the first QoS profile, and the second alternative QoS profile being used for replacing the second QoS profile. By means of the method in the present disclosure, dynamic adaptive scheduling for QoS requirements of a first service is realized, and it is ensured that the QoS requirements of the first service can be guaranteed, such that the first service can be successfully executed, thereby improving the user experience.

## Description

### TECHNICAL FIELD

The disclosure relates to the field of communication technologies, and particularly to a communication method and a communication apparatus, a communication device, a communication system, and a storage medium.

### BACKGROUND

A 5th generation mobile communication system (5G) communication service typically corresponds to a quality of service (QoS) requirement of an ultra-low latency, an ultra-large bandwidth, and an ultra-large capacity. However, currently, radio resources change dynamically, and it is highly possible that current radio resources may not satisfy a QoS requirement of a communication service. For example, the current radio resources may not satisfy the QoS requirement such as a latency, a bandwidth, or a capacity. In this case, how to ensure the QoS requirement of the communication service is a technical problem that needs to be solved urgently.

### SUMMARY

The disclosure provides a communication method and a communication apparatus, a communication device, a communication system, and a storage medium.

According to a first aspect of embodiments of the disclosure, a communication method is provided. The communication method includes:
sending a first request, in which the first request is configured to request a session resource for a first service; the first request includes at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a second aspect of embodiments of the disclosure, a communication method is provided. The communication method includes:
receiving a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a third aspect of embodiments of the disclosure, a communication method is provided. The communication method includes:
receiving a first rule, in which the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a fourth aspect of embodiments of the disclosure, a communication method is provided. The communication method includes:
receiving a second rule, in which the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a fifth aspect of embodiments of the disclosure, an application function (AF) is provided. The AF includes:
a sending module, configured to send a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a sixth aspect of embodiments of the disclosure, a second network element is provided. The second network element includes:
a receiving module, configured to receive a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a seventh aspect of embodiments of the disclosure, a second network element is provided. The second network element includes:
a receiving module, configured to receive a first rule, in which the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to an eighth aspect of embodiments of the disclosure, an access network device is provided. The access network device includes:
a receiving module, configured to receive a second rule, in which the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

According to a ninth aspect of embodiments of the disclosure, a communication device is provided. The communication device includes:
one or more processors.

The one or more processors are configured to call instructions to cause the communication device to execute the communication method according to the first aspect, the second aspect, the third aspect, or the fourth aspect.

According to a tenth aspect of embodiments of the disclosure, a communication system is provided. The communication system includes an AF, a second network element, a third network element, and an access network device. The AF is configured to implement the communication method according to the first aspect, the second network element is configured to implement the communication method according to the second aspect, the third network element is configured to implement the communication method according to the third aspect, and the access network device is configured to implement the communication method according to the fourth aspect.

According to an eleventh aspect of embodiments of the disclosure, a storage medium is provided. The storage medium stores instructions, in which the instructions, when run on a communication device, cause the communication device to execute the communication method according to the first aspect, the second aspect, the third aspect, or the fourth aspect.

According to a twelfth aspect of embodiments of the disclosure, a communication method is provided. The communication method is executed by a core network functional node, and the communication method includes:
receiving a first request sent by an AF, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile; and
sending a second rule to an access network device based on the first request, in which the second rule includes at least one of: the first indication, the first information, the second information, the at least one first alternative QoS profile, the third information, the at least one second alternative QoS profile, or the fourth information.

### BRIEF DESCRIPTION OF THE DRAWINGS

The above and/or additional aspects and advantages of the disclosure will become apparent and readily appreciated from the following description of embodiments, in combination with the accompanying drawings.
FIG. 1A is a schematic diagram illustrating an architecture of a communication system according to an embodiment of the disclosure.
FIG. 1B is a schematic diagram illustrating a core network architecture and functional nodes according to an embodiment of the disclosure.
FIG. 2A is a flow chart illustrating an interaction of a communication method according to an embodiment of the disclosure.
FIG. 3A to FIG. 3B are flow charts illustrating a communication method according to yet another embodiment of the disclosure.
FIG. 4A to FIG. 4B are flow charts illustrating a communication method according to yet another embodiment of the disclosure.
FIG. 5A to FIG. 5B are flow charts illustrating a communication method according to yet another embodiment of the disclosure.
FIG. 6A to FIG. 6D are flow charts illustrating a communication method according to yet another embodiment of the disclosure.
FIG. 7A is a block diagram illustrating an application function (AF) according to an embodiment of the disclosure.
FIG. 7B is a block diagram illustrating a second network element according to an embodiment of the disclosure.
FIG. 7C is a block diagram illustrating a third network element according to an embodiment of the disclosure.
FIG. 7D is a block diagram illustrating an access network device according to an embodiment of the disclosure.
FIG. 8A is a block diagram illustrating a communication device according to an embodiment of the disclosure.
FIG. 8B is a block diagram illustrating a chip according to an embodiment of the disclosure.

### DETAILED DESCRIPTION

The disclosure provides a communication method, a communication apparatus, a communication device, a communication system, and a storage medium.

In a first aspect, embodiments of the disclosure provide a communication method. The communication method is executed by an application function (AF), including:
sending a first request, in which the first request is configured to request a session resource for a first service; the first request includes at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In the above embodiments, the first request sent by the AF includes at least one of: the first information, the second information, the first indication, the at least one first alternative QoS profile, or the at least one second alternative QoS profile. The first information may indicate the first QoS profile corresponding to the PDU, the second information may indicate the second QoS profile corresponding to the PDU set, the first alternative QoS profile is configured to replace the first QoS profile, and the second alternative QoS profile is configured to replace the second QoS profile. The first indication may indicate: the first QoS profile and the second QoS profile being able to replace each other; and the first alternative QoS profile and the second alternative QoS profile being able to replace each other. Thus, it may be known that when requesting the session resource for the first service, the AF may also provide the first QoS profile, the second QoS profile, the first alternative QoS profile, and the second alternative QoS profile, and may also provide the first indication to indicate that the first QoS profile, the second QoS profile, the first alternative QoS profile, and the second alternative QoS profile are able to replace each other. Thus, when an access network device subsequently schedules resources for the first service, in a case that a current transmission resource of the access network device is unable to satisfy a QoS requirement of a currently used QoS profile, the access network device may, according to the first indication, replace the currently used QoS profile based on the first QoS profile, the second QoS profile, the first alternative QoS profile, and the second alternative QoS profile, to enable that a QoS requirement of a replaced QoS profile is able to be satisfied by the current transmission resource of the access network device, thus implementing dynamic adaptive scheduling of the QoS requirement of the first service, ensuring that the QoS requirement of the first service is able to be guaranteed, enabling the first service to be performed smoothly, and improving the user experience.

In addition, in the above embodiments, the first request sent by the AF may also include the third information indicating the priority of the at least one first alternative QoS profile and the fourth information indicating the priority of the at least one second alternative QoS profile. Thus, the access network device may replace the currently used QoS profile of the access network device based on the priority of the first alternative QoS profile and/or the priority of the second alternative QoS profile, to enable that the replaced QoS profile is able to adapt to the current transmission resource of the access network device and has a relatively high priority, thus ensuring accuracy of the replaced QoS profile.

In combination with some embodiments of the first aspect, in some embodiments, in some embodiments, the first QoS profile is configured to schedule a PDU in a service data flow (SDF) of the first service, to enable that the PDU satisfies a QoS requirement of the first QoS profile; and the second QoS profile is configured to schedule a PDU set in the SDF of the first service, to enable that the PDU set satisfies a QoS requirement of the second QoS profile.

The first alternative QoS profile is configured to replace the first QoS profile to schedule the PDU, and the second alternative QoS profile is configured to replace the second QoS profile to schedule the PDU set.

In the above embodiments, by replacing the first QoS profile with the first alternative QoS profile, or by replacing the second QoS profile with the second alternative QoS profile, the first alternative QoS profile or the second alternative QoS profile may be replaced to schedule the PDU or the PDU set in the SDF of the first service in a case that the QoS requirement of the first QoS profile or the second QoS profile may not be satisfied by the current transmission resource of the access network device, thus implementing dynamic adaptive scheduling of the QoS requirement of the first service, ensuring that the QoS requirement of the first service is able to be guaranteed, enabling the first service to be performed smoothly, and improving the user experience.

In combination with some embodiments of the first aspect, in some embodiments, the second QoS profile is able to replace the first QoS profile;
the first QoS profile is able to replace the second QoS profile;
the second alternative QoS profile is able to replace the first alternative QoS profile; or
the first alternative QoS profile is able to replace the second alternative QoS profile;
in which replacing the first QoS profile with the second QoS profile includes: changing from a first state to a second state;
replacing the second QoS profile with the first QoS profile includes: changing from the second state to the first state;
replacing the first alternative QoS profile with the second alternative QoS profile includes: changing from a third state to a fourth state;
replacing the second alternative QoS profile with the first alternative QoS profile includes: changing from the fourth state to the third state;
in which the first state includes: scheduling the PDU in the SDF of the first service by using the first QoS profile;
the second state includes: scheduling the PDU set in the SDF of the first service by using the second QoS profile;
the third state includes: scheduling the PDU in the SDF of the first service by using the first alternative QoS profile;
the fourth state includes: scheduling the PDU set in the SDF of the first service by using the second alternative QoS profile.

In the above embodiments, the first QoS profile and the second QoS profile may be replaced with each other, or the first alternative QoS profile and the second alternative QoS profile may be replaced with each other. The first QoS profile and the first alternative QoS profile are QoS profiles corresponding to the PDU, and the second QoS profile and the second alternative QoS profile are QoS profiles corresponding to the PDU set. Therefore, by performing replacement between the first QoS profile and the second QoS profile, or by performing replacement between the first alternative QoS profile and the second alternative QoS profile, the access network device may switch between processing at PDU granularity and processing at PDU set granularity when handling the first service, thus more effectively guaranteeing the end-to-end QoS requirement, better adapting to resource demands and allocation, coordinating end-to-end QoS resources, ensuring smooth execution of the first service, and improving the user experience.

In combination with some embodiments of the first aspect, in some embodiments, the first alternative QoS profile includes at least one of:
a first QoS parameter corresponding to the PDU;
a second QoS parameter corresponding to the PDU set;
the first indication;
fifth information, in which the fifth information indicates a priority corresponding to the first alternative QoS profile; or
sixth information, in which the sixth information indicates respective priorities corresponding to the first QoS parameter and the second QoS parameter in the first alternative QoS profile.

In combination with some embodiments of the first aspect, in some embodiments, the second alternative QoS profile includes at least one of:
a second QoS parameter corresponding to a PDU set;
the first indication;
seventh information, in which the seventh information indicates a priority corresponding to the second alternative QoS profile.

In combination with some embodiments of the first aspect, in some embodiments, the PDU set extension function of the first alternative QoS profile includes:
causing a second QoS parameter corresponding to a PDU set to be included in the first alternative QoS profile.

In combination with some embodiments of the first aspect, in some embodiments, the support function of the second alternative QoS profile includes:
the second alternative QoS profile being independent of the first alternative QoS profile.

In combination with some embodiments of the first aspect, in some embodiments, the support function of both the first alternative QoS profile and the second alternative QoS profile includes any one of:
the second alternative QoS profile and the first alternative QoS profile being independent of each other and being included in the same profile; or
the second alternative QoS profile and the first alternative QoS profile being independent of each other and not being included in the same profile.

In the above embodiments, contents included in the first alternative QoS profile, contents included in the second alternative QoS profile, and the first function are defined in detail, such that the access network device may, based on the contents included in the first alternative QoS profile, the contents included in the second alternative QoS profile, and the first function, adaptively replace a QoS profile according to the current transmission resource of the access network device, thus effectively guaranteeing the end-to-end QoS requirement, better adapting to resource demands and allocation, coordinating the end-to-end QoS resources, ensuring smooth execution of the first service, and improving the user experience.

In combination with some embodiments of the first aspect, in some embodiments, the first indication is also configured for at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

In combination with some embodiments of the first aspect, in some embodiments, the first QoS profile and the second QoS profile being able to replace each other includes: the first QoS profile and the second QoS profile being able to replace each other based on at least one of the first indication, a first policy, a local configuration of an access network device, a priority, a first condition, or a second condition.

The first alternative QoS profile and the second alternative QoS profile being able to replace each other includes: the first alternative QoS profile and the second alternative QoS profile being able to replace each other based on at least one of the first indication, the first policy, the local configuration of the access network device, the priority, a third condition, or a fourth condition.

In the above embodiments, the first QoS profile and the second QoS profile may be replaced with each other based on at least one of the first indication, the first policy, the local configuration of the access network device, the priority, the first condition, or the second condition; and the first alternative QoS profile and the second alternative QoS profile may be replaced with each other based on at least one of the first indication, the first policy, the local configuration of the access network device, the priority, the third condition, or the fourth condition, thus improving the accuracy of QoS profile replacement.

In combination with some embodiments of the first aspect, in some embodiments, the first QoS parameter corresponding to the PDU includes at least one of:
a packet delay budget (PDB);
a packet error rate (PER);
an uplink (UL)-guaranteed bitrate;
a downlink (DL)-guaranteed bitrate;
an averaging window; or
a maximum data burst volume.

In combination with some embodiments of the first aspect, in some embodiments, the second QoS parameter corresponding to the PDU set includes at least one of:
a packet set delay budget;
a packet set error rate;
a PSIHI;
a UL-guaranteed bitrate of the PDU set;
a DL-guaranteed bitrate of the PDU set;
an averaging window of the PDU set; or
a maximum data burst volume of the PDU set.

In the above embodiments, detailed contents included in the first QoS parameter corresponding to the PDU and detailed contents included in the second QoS parameter corresponding to the PDU set are defined, such that the replacement of the QoS profile may be implemented subsequently based on the first QoS parameter and the second QoS parameter, thus effectively guaranteeing the end-to-end QoS requirements, better adapting to the resource demands and allocation, coordinating the end-to-end QoS resources, ensuring the smooth execution of the first service, and improving the user experience.

In combination with some embodiments of the first aspect, in some embodiments, the first request also includes a service identifier corresponding to the first service.

In combination with some embodiments of the first aspect, in some embodiments, sending the first request includes:
sending the first request to a second network element via a first network element.

In combination with some embodiments of the first aspect, in some embodiments, the method also includes:
receiving a first message or a second message;
in which the first message indicates at least one of: replacement of a QoS profile, a replaced QoS profile, or a QoS flow identifier (QFI);
the second message indicates at least one of: a QFI, or a transmission resource of an access network device being unable to satisfy a QoS requirement corresponding to the first QoS profile, the second QoS profile, the first alternative QoS profile, or the second alternative QoS profile.

In the above embodiments, the first request includes the service identifier corresponding to the first service to identify the first service, such that the access network device may subsequently replace a QoS profile for the first service, and it is ensured that the first service may be performed smoothly. Moreover, in some embodiments, the AF also receives the first message after the QoS profile is replaced, in which the first message indicates at least one of: the replacement of the QoS profile, the replaced QoS profile, or the QFI. Thus, based on the first message, the AF may be timely aware of a replacement status of the QoS profile at the access network device, ensuring alignment of understanding between the AF and the access network device regarding related procedures of the first service. Further, in a case that the transmission resource of the access network device may not satisfy QoS requirements corresponding to the first QoS profile, the second QoS profile, the first alternative QoS profile, and the second alternative QoS profile, the AF receives the second message, in which the second message indicates at least one of: the QFI, or the transmission resource of the access network device being unable to satisfy the QoS requirement corresponding to the first QoS profile, the second QoS profile, the first alternative QoS profile, or the second alternative QoS profile. Thus, based on the second message, the AF may be timely aware of the relevant status of the QoS profile at the access network device side, thus ensuring alignment of understanding between the AF and the access network device on the related procedures of the first service, and guaranteeing the stability during execution of the first service.

In a second aspect, embodiments of the disclosure provide a communication method. The communication method is executed by a second network element, including:
receiving a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In combination with some embodiments of the second aspect, in some embodiments, the method also includes:
determining a first rule based on the first request, in which the first rule includes at least one of: the first indication, the first information, the second information, at least one first alternative QoS profile, the third information, at least one second alternative QoS profile, or the fourth information; and
sending the first rule to a third network element.

In combination with some embodiments of the second aspect, in some embodiments, the method also includes:
receiving a first message or a second message, in which the first message indicates at least one of: replacement of a QoS profile, a replaced QoS profile, or a QFI; and the second message indicates at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to an AF.

In a third aspect, embodiments of the disclosure provide a communication method. The communication method is executed by a third network element, including:
receiving a first rule, in which the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In some embodiments in combination with the third aspect, in some embodiments, the method also includes:
determining a second rule based on the first rule, in which the second rule includes at least one of: the first indication, the first information, the second information, at least one first alternative QoS profile, the third information, at least one second alternative QoS profile, or the fourth information; and
sending the second rule to an access network device.

In combination with some embodiments of the third aspect, in some embodiments, the method also includes:
receiving a first message or a second message, in which the first message indicates at least one of: replacement of a QoS profile, a replaced QoS profile, or a QFI; and the second message indicates at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to a second network element.

In a fourth aspect, embodiments of the disclosure provide a communication method. The communication method is executed by an access network device, including:
receiving a second rule, in which the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In combination with some embodiments of the fourth aspect, in some embodiments, the method also includes:
in response to a current transmission resource of the access network device being unable to satisfy a QoS requirement of a currently used QoS profile, selecting a target QoS profile from the first QoS profile, the second QoS profile, at least one first alternative QoS profile, and at least one second alternative QoS profile, in which a QoS requirement corresponding to the target QoS profile is able to be satisfied by the current transmission resource of the access network device, and the target QoS profile has a highest priority; and
replacing the currently used QoS profile with the target QoS profile.

In combination with some embodiments of the fourth aspect, in some embodiments, the first indication is also configured to at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

In combination with some embodiments of the fourth aspect, in some embodiments, the method also includes:
in response to the currently used QoS profile of the access network device being the first QoS profile, in a case that the first condition is satisfied, replacing the first QoS profile with the second QoS profile;
in response to the currently used QoS profile of the access network device being the second QoS profile, in a case that the second condition is satisfied, replacing the second QoS profile with the first QoS profile;
in response to the currently used QoS profile of the access network device being the first alternative QoS profile, in a case that the third condition is satisfied, replacing the first alternative QoS profile with the second alternative QoS profile; or
in response to the currently used QoS profile of the access network device being the second alternative QoS profile, in a case that the fourth condition is satisfied, replacing the second alternative QoS profile with the first alternative QoS profile.

In combination with some embodiments of the fourth aspect, in some embodiments, the method also includes:
in response to the access network device performing replacement of a QoS profile, sending a first message, in which the first message indicates at least one of: replacement of a QoS profile, a replaced QoS profile, or a QFI; or
in response to a transmission resource of the access network device being unable to satisfy a QoS requirement corresponding to the first QoS profile, the second QoS profile, the first alternative QoS profile, or the second alternative QoS profile, sending a second message, in which the second message indicates at least one of: a QFI, or a transmission resource of an access network device being unable to satisfy a QoS requirement corresponding to the first QoS profile, the second QoS profile, the first alternative QoS profile, or the second alternative QoS profile.

In a fifth aspect, embodiments of the disclosure provide an AF, including:
a sending module, configured to send a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In a sixth aspect, embodiments of the disclosure provide a second network element. The second network element includes:
a receiving module, configured to receive a first request, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In a seventh aspect, embodiments of the disclosure provide a third network element. The third network element includes:
a receiving module, configured to receive a first rule, in which the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In an eighth aspect, embodiments of the disclosure provide an access network device, including:
a receiving module, configured to receive a second rule, in which the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
in which the first alternative QoS profile is configured to replace the first QoS profile, and the second alternative QoS profile is configured to replace the second QoS profile;
the first indication is configured for at least one of:
   enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
   indicating that the second alternative QoS profile is able to replace the first alternative QoS profile;
   indicating that the first alternative QoS profile is able to replace the second alternative QoS profile;
   indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

In a ninth aspect, embodiments of the disclosure provide a communication device. The communication device includes: one or more processors; and one or more memories storing instructions, in which the one or more processors are configured to call the instructions to cause the communication device to execute the communication method according to the first aspect or alternative implementations of the first aspect, the second aspect or alternative implementations of the second aspect, the third aspect or alternative implementations of the third aspect, and the fourth aspect or alternative implementations of the fourth aspect.

In a tenth aspect, embodiments of the disclosure provide a communication system. The communication system includes: an AF, configured to implement the method according to the first aspect or alternative implementations of the first aspect, a second network element, configured to implement the method according to the second aspect or alternative implementations of the second aspect, a third network element, configured to implement the method according to the third aspect or alternative implementations of the third aspect, and an access network device, configured to implement the method according to the fourth aspect or alternative implementations of the fourth aspect.

In an eleventh aspect, embodiments of the disclosure provide a storage medium. The storage medium stores instructions, in which the instructions, when run on a communication device, cause the communication device to execute the communication method according to the first aspect or alternative implementations of the first aspect, the second aspect or alternative implementations of the second aspect, the third aspect or alternative implementations of the third aspect, and the fourth aspect or alternative implementations of the fourth aspect.

In a twelfth aspect, embodiments of the disclosure provide a program product. When the program product is executed by a communication device, the communication device is caused to execute the communication method according to the first aspect or alternative implementations of the first aspect, the second aspect or alternative implementations of the second aspect, the third aspect or alternative implementations of the third aspect, and the fourth aspect or alternative implementations of the fourth aspect.

In a thirteenth aspect, embodiments of the disclosure provide a computer program. When the computer program runs on a computer, the computer is caused to execute the communication method according to the first aspect or alternative implementations of the first aspect, the second aspect or alternative implementations of the second aspect, the third aspect or alternative implementations of the third aspect, and the fourth aspect or alternative implementations of the fourth aspect.

In a fourteenth aspect, embodiments of the disclosure provide a communication method. The communication method is executed by a core network functional node, including:
receiving a first request sent by an AF, in which the first request is configured to request a session resource for a first service; the first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
sending a second rule to an access network device based on the first request, in which the second rule includes at least one of: the first indication, the first information, the second information, at least one first alternative QoS profile, the third information, at least one second alternative QoS profile, or the fourth information.

It may be understood that all the terminal, the network device, the communication device, the communication system, the storage medium, the program product, and the computer program are used to execute the method in the embodiments of the disclosure. Thus, for beneficial effects achieved, please refer the beneficial effects in the corresponding methods, which is not repeated herein.

Embodiments of the disclosure provide invention names. In some embodiments, terms such as "communication method", "method for processing information", "method for sending information", and "method for receiving information" may be used interchangeably; terms such as "communication apparatus", "apparatus for processing information", "apparatus for sending information", and "apparatus for receiving information" may be used interchangeably; and terms such as "system for processing information", "communication system", "system for sending information", and "system for receiving information" may be used interchangeably.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and an order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with alternative implementations of other embodiments.

In various embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of"/ "multiple" refers to two or more.

In some embodiments, the terms "at least one of", "one or more", "a plurality of", "multiple" etc. may be used interchangeably.

In embodiments of the disclosure, descriptions such as "at least one of A, B, C..." and "A and/or B and/or C..." include a case where any one of A, B, C... exists alone, and also include a case of any combination of any plurality of items in A, B, C..., and each case may exist independently. For example, "at least one of A, B, and C" includes a case of A alone, B alone, C alone, a combination of A and B, a combination of A and C, a combination of B and C, and a combination of A, B, and C. For example, "A and/or B" includes a case of A alone, B alone, and a combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, please refer the description in the context of the claims or embodiments, and the statement should not constitute redundant restrictions due to the use of prefixes. For example, if the descriptive object is "field", ordinal numbers before the "field" in the "first field" and the "second field" do not limit a position or order between the "fields", and the terms "first" and "second" do not limit whether the "fields" modified are in the same message, nor do limit the order of the "first field" and the "second field". For another example, if the descriptive object is "level", ordinal numbers before the "level" in the "first level" and the "second level" do not limit a priority between the "levels". For another example, a number of descriptive objects is not limited by the ordinal number, and may be one or more. Taking the "first apparatus" as an example, there may be one or more "apparatuses". In addition, the objects modified by different prefixes may be the same or different. For example, if the descriptive object is "an apparatus", the "first apparatus" may be the same as or different from the "second apparatus", and a type of the "first apparatus" and the "second apparatus" may be the same or different. For another example, if the descriptive object is "information", the "first information" may be the same as or different from the "second information", and contents the "first information" and the "second information" may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus etc. may be interpreted as physical or virtual, and names of the apparatus are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (such as, an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, a structure in which communication between the access network device, the core network device, or the network device and the terminal is replaced with communication between multiple terminals (for example, device-to-device (D2D), vehicle-to-everything (V2X), etc.) may also be applied to various embodiments of the disclosure. In this case, the terminal may be set to have a structure that has all or some of functions of the access network device. In addition, the language such as "up" and "down" may also be replaced with the language corresponding to the communication between the terminals (such as, "side"). For example, the up channel, the down channel, etc. may be replaced with the side channel or direct channel, and the uplink, the downlink, etc. may be replaced with a sidelink or a direct link.

In some embodiments, the terminal may be replaced with the access network device, the core network device, or the network device. In this case, the access network device, the core network device, or the network device may also be configured to have a structure that has all or some of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and combination of any elements, any rows, or any columns may also be implemented as an independent embodiment.

The correspondences illustrated in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters illustrated in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, predefine, store, pre-store, pre-negotiate, pre-configure, solidify, or pre-fire.

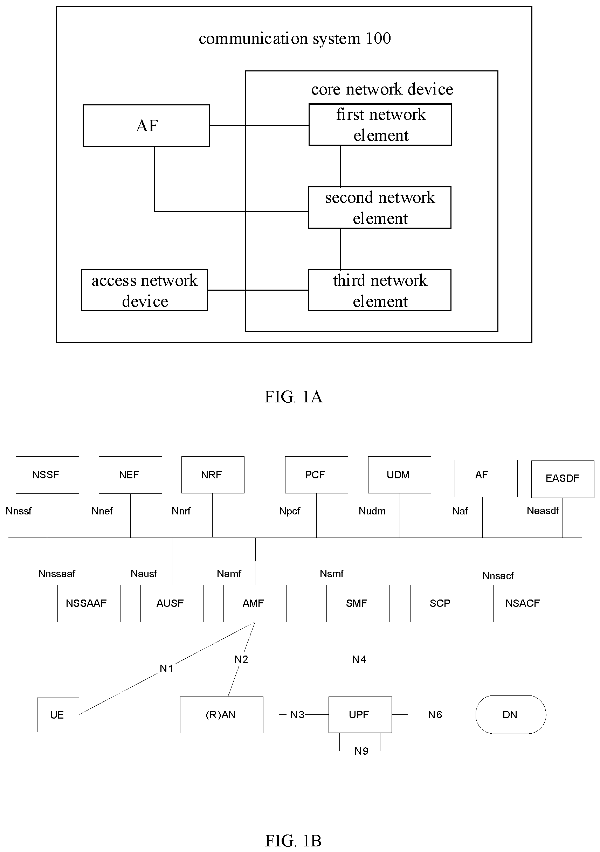

FIG. 1 is a schematic diagram illustrating an architecture of a communication system according to an embodiment of the disclosure. As illustrated in FIG. 1, the communication system 100 may include an access network device, a core network device and an application function (AF).

In some embodiments, the access network device may be a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the access network device may include a central unit (CU) and distributed units (DUs), in which the CU may also be called a control unit. A protocol layer of the access network device may be divided by adopting the CU-DU structure. Some of functions of the protocol layer are centrally controlled by the CU, and some of or all of remaining functions of the protocol layer are distributed in the DUs which are centrally controlled by the CU, but is not limited herein.

In some embodiments, the core network function node may be a device, including a first network element, a second network element, and a third network element, or may be multiple devices or device groups, respectively including all or some of the first network element, the second network element, and the third network element. The network elements may be virtual or physical. The core network includes, such as, at least one of an evolved packet core (EPC), a 5G core network (5GCN), or a next generation core (NGC). Alternatively, the core network function node may also be a location management function network element. For example, the location management function network element includes a location server, and the location server may be implemented as any one of: a location management function (LMF), an enhanced serving mobile location centre (E-SMLC), secure user plane location (SUPL), or a SUPL location platform (SUPLLP).

In some embodiments, the first network element may be used to provide a network exposure function.

In some embodiments, the first network element is, such as, a network exposure function (NEF) network element, and a name of the first network element is not limited herein.

In some embodiments, the second network element may be used to provide a policy control function.

In some embodiments, the second network element is, such as, a policy control function (PCF) network element, and a name of the second network element is not limited herein.

In some embodiments, the third network element may be used to provide a session management function.

In some embodiments, the third network element is, such as, a session management function (SMF) network element, and a name of the third network element is not limited herein.

Alternatively, FIG. 1B is a schematic diagram illustrating a core network architecture and functional nodes according to an embodiment of the disclosure. As illustrated in FIG. 1B, a 5G system architecture is combined by the following network functions (NFs):
an authentication server function (AUSF);
an access and mobility management function (AMF);
a data network (DN), such as, operator services, Internet access, or 3rd party services;
a unstructured data storage function (UDSF);
a network exposure function (NEF);
a network repository function (NRF);
a network slice admission control function (NSACF);
a network slice-specific and SNPN authentication and authorization function (NSSAF);
a network slice selection function (NSSF);
a policy control function (PCF);
a session management function (SMF);
a unified data management (UDM);
a unified data repository (UDR);
a user plane function (UPF);
a UE radio capability management function (UCMF);
an application function (AF);
a UE;
a (radio) access network ((R)AN);
a 5G equipment identity register (5G-EIR);
a network data analytics function (NWDAF);
a charging function (CHF);
a time sensitive networking AF (TSN AF);
a time sensitive communication and time synchronization function (TSCTSF);
a data collection coordination function (DCCF);
an analytics data repository function (ADRF);
a messaging framework adaptor function (MFAF);
a non-seamless WLAN offload function (NSWOF);
noting: the functions provided by the DCCF and/or the ADRF may also be hosted by the NWDAF; and
an edge application server discovery function (EASDF).

The 5G system architecture also includes the following network entities:
a service communication proxy (SCP);
a security edge protection proxy (SEPP);
a non-3GPP interworking function (N3IWF);
a trusted non-3GPP gateway function (TNGF);
a wireline access gateway function (WAGF); and
a trusted WLAN interworking function (TWIF).

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

It may be understood that the communication system described in embodiments of the disclosure aims to more clearly illustrate the technical solutions of embodiments of the disclosure, and does not constitute a limitation on the technical solutions provided in the embodiments of the disclosure. A skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or some of the subjects illustrated in FIG. 1, but are not limited herein. The subjects illustrated in FIG. 1 are examples, and the communication system may include all or some of the subjects in FIG. 1, or may include other subjects than those illustrated in FIG. 1. The number and the form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them above. In addition, multiple systems may also be combined (for example, a combination of LTE or LTE-A and 5G, etc.) for application.

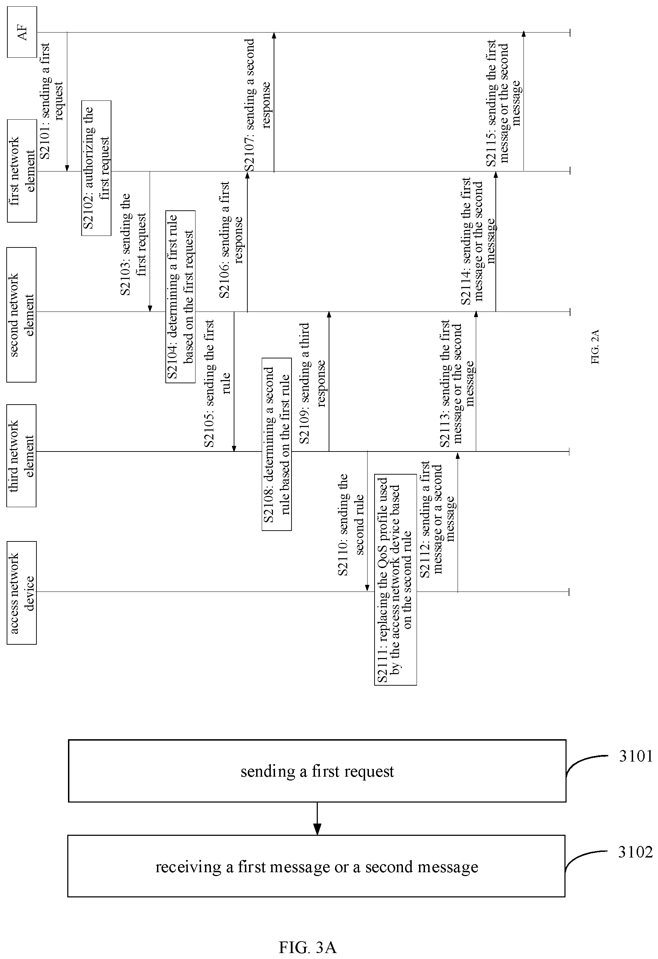

FIG. 2A is a flow chart illustrating an interaction of a communication method according to an embodiment of the disclosure. As illustrated in FIG. 2A, embodiments of the disclosure relate to a communication method, applied to a communication system 100. The communication method includes the following.

At step 2101, an AF sends a first request.

Alternatively, the AF may send the first request in a case that a first service needs to be performed, in which the first request may be configured to request a session resource for the first service. Alternatively, the first request may be configured for session establishment of the first service, or may be configured for session update of the first service. The first service may be, such as, an extended reality media (XRM) service, and the first request may be, such as, an AF session resource request, or an AF request, etc.

Alternatively, the AF may send the first request to a first network element, and the first network element receives the first request. The first network element may be, such as, an NEF network element. Alternatively, the AF may send the first request via a Nnef_AFsessionWithQoS_Create request.

Alternatively, in some embodiments, the first request may include at least one of:
first information, indicating a first QoS profile corresponding to a PDU;
second information, indicating a second QoS profile corresponding to a PDU set;
a first indication;
at least one first alternative QoS profile;
third information, indicating a priority of the at least one first alternative QoS profile;
at least one second alternative QoS profile; or
fourth information, indicating a priority of the at least one second alternative QoS profile.

It should be noted that the "QoS profile" described above is only an exemplary designation in the embodiments of the disclosure, and it may also be referred to as "QoS specification file, QoS document, or QoS file", etc., which is not limited in detail in the disclosure.

The contents included in the first request are described in detail below.

Alternatively, the first QoS profile may be a QoS profile corresponding to a PDU requested to be used by the AF. The first QoS profile may include a first QoS parameter corresponding to the PDU. The first QoS parameter may include, such as, at least one of: a PDB, a PER, a UL-guaranteed bitrate, a DL-guaranteed bitrate, an averaging window, or a maximum data burst volume. The first QoS parameter may be configured to define a QoS requirement (i.e., a PDB requirement, a PER requirement, a UL-guaranteed bitrate requirement, etc.) corresponding to the PDU. The first QoS profile may be configured to schedule a PDU in an SDF of the first service, to enable that the PDU satisfies a QoS requirement of the first QoS profile. Alternatively, the first information may be the first QoS profile, or the first information may be indication information corresponding to the first QoS profile. For example, the first information may be a QoS reference corresponding to the first QoS profile, and the QoS reference may be, such as, a sequence number.

Alternatively, the second QoS profile may be a QoS profile corresponding to a PDU set requested to be used by the AF. The second QoS profile may include a second QoS parameter corresponding to the PDU set. The second QoS parameter may include, such as, at least one of: a packet set delay budget, a packet set error rate, a PSIHI, a UL-guaranteed bitrate of the PDU set, a DL-guaranteed bitrate of the PDU set, an averaging window of the PDU set, or a maximum data burst volume of the PDU set. The second QoS parameter may be configured to define a QoS requirement (i.e., a packet set delay budget requirement, a packet set error rate requirement, a UL-guaranteed bitrate requirement of the PDU set, etc.) corresponding to the PDU set. The second QoS profile is configured to schedule a PDU set in the SDF of the first service, to enable that the PDU set satisfies a QoS requirement of the second QoS profile. Alternatively, the second information may be the second QoS profile, or the second information may be indication information corresponding to the second QoS profile. For example, the second information may be a QoS reference corresponding to the second QoS profile.

Alternatively, a difference between the PDU and the PDU set may be that: a PDU set may include multiple PDUs. When a scheduling granularity of the SDF of the first service is the PDU, data transmission may be performed in units of "PDU". When the scheduling granularity of the SDF of the first service the a PDU set, data transmission may be performed in units of "PDU set". When data transmission is performed in units of "PDU set", required communication resources, bandwidth, and capacity are relatively large, and the execution efficiency of the first service is also relatively high.

Alternatively, the first alternative QoS profile may be configured to schedule the PDU, and the first alternative QoS profile may be configured to replace the first QoS profile to schedule the PDU. Alternatively, a QoS requirement corresponding to the first alternative QoS profile is different from a QoS requirement corresponding to the first QoS profile. In some embodiments, the first alternative QoS profile may include the first QoS parameter corresponding to the PDU, in which a parameter value of the first QoS parameter included in the first alternative QoS profile may be different from a parameter value of the first QoS parameter included in the first QoS profile, thus enabling that the QoS requirement corresponding to the first alternative QoS profile is different from the QoS requirement corresponding to the first QoS profile. Moreover, parameter values of the first QoS parameter included in different first alternative QoS profiles are also different, to enable that QoS requirements corresponding to different first alternative QoS profiles are different.

Alternatively, the second alternative QoS profile may be configured to schedule the PDU set, and the second alternative QoS profile may be configured to replace the second QoS profile to schedule the PDU set. Alternatively, a QoS requirement corresponding to the second alternative QoS profile is different from a QoS requirement corresponding to the second QoS profile. In some embodiments, the second alternative QoS profile may include the second QoS parameter corresponding to a PDU set, in which a parameter value of the second QoS parameter included in the second alternative QoS profile may be different from a parameter value of the second QoS parameter included in the second QoS profile, thus enabling that the QoS requirement corresponding to the second alternative QoS profile is different from the QoS requirement corresponding to the second QoS profile. Moreover, parameter values of the second QoS parameter included in different second alternative QoS profiles are also different, to enable that QoS requirements corresponding to different second alternative QoS profiles are different.

Alternatively, in some embodiments, the first indication may be configured for at least one of:
enabling a first function;
indicating that a second alternative QoS profile is able to replace a first alternative QoS profile;
indicating that a first alternative QoS profile is able to replace a second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile;
indicating a first condition, in which the first condition is a condition that needs to be satisfied when the second QoS profile is able to replace the first QoS profile, such as a time condition that needs to be satisfied when the second QoS profile is able to replace the first QoS profile, for example, when a time period is from 9:00 to 11:00 in the morning, network resources are generally relatively sufficient, and in this case, the first QoS profile may be replaced with the second QoS profile, to process the SDF of the first service with the PDU set being the granularity, thus improving the processing efficiency of the first service;
indicating a second condition, in which the second condition is a condition that needs to be satisfied when the first QoS profile is able to replace the second QoS profile, such as, a time condition that needs to be satisfied when the first QoS profile is able to replace the second QoS profile, for example, when a time period is from 9:00 to 11:00 in the evening, network resources are generally relatively congested, and in this case, the second QoS profile may be replaced with the first QoS profile, to process the SDF of the first service with the PDU being granularity, thus adapting to the congested network resources;
indicating a third condition, in which the third condition is a condition that needs to be satisfied when the second alternative QoS profile is able to replace the first alternative QoS profile; the third condition is similar to the first condition, and details are not repeated herein; or
indicating a fourth condition, in which the fourth condition is a condition that needs to be satisfied when the first alternative QoS profile is able to replace the second alternative QoS profile; the fourth condition is similar to the second condition, and details are not repeated herein.

Alternatively, the first function may include at least one of:
a PDU set extension function of the first alternative QoS profile, in which the PDU set extension function of the first alternative QoS profile may include: causing a second QoS parameter corresponding to a PDU set to be included in the first alternative QoS profile;
a support function of the second alternative QoS profile, in which the support function of the second alternative QoS profile may include: the second alternative QoS profile being independent of the first alternative QoS profile; that is, the second alternative QoS profile and the first alternative QoS profile are two independent and different profiles respectively;
a support function of both the first alternative QoS profile and the second alternative QoS profile, in which the support function of both the first alternative QoS profile and the second alternative QoS profile may include any one of: the second alternative QoS profile and the first alternative QoS profile being independent of each other and being included in the same profile; or the second alternative QoS profile and the first alternative QoS profile being independent of each other and not being included in the same profile;
the first QoS profile and the second QoS profile being able to replace each other; or
the first alternative QoS profile and the second alternative QoS profile being able to replace each other.

Alternatively, in some embodiments, "replacing the first QoS profile with the second QoS profile" may include: changing from a first state to a second state, in which the first state includes: scheduling the PDU in the SDF of the first service by using the first QoS profile; the second state includes: scheduling the PDU set in the SDF of the first service by using the second QoS profile.

Alternatively, in some other embodiments, "replacing the second QoS profile with the first QoS profile" may include: changing from the second state to the first state.

Alternatively, in some other embodiments, "replacing the first alternative QoS profile with the second alternative QoS profile" may include: changing from a third state to a fourth state, in which the third state includes: scheduling the PDU in the SDF of the first service by using the first alternative QoS profile; the fourth state includes: scheduling the PDU set in the SDF of the first service by using the second alternative QoS profile.

Alternatively, in some other embodiments, "replacing the second alternative QoS profile with the first alternative QoS profile" may include: changing from the fourth state to the third state.

In combination with the above contents, alternatively, in some embodiments, the first alternative QoS profile may include at least one of:
a first QoS parameter corresponding to a PDU;
a second QoS parameter corresponding to a PDU set;
the first indication;
fifth information, in which the fifth information may be configured to indicate a priority corresponding to the first alternative QoS profile; or
sixth information, in which the sixth information is configured to indicate respective priorities corresponding to the first QoS parameter and the second QoS parameter in the first alternative QoS profile.

It should be noted that, in some embodiments, when the first alternative QoS profile also includes the second QoS parameter described above, the first alternative QoS may also be configured to replace the second QoS profile for scheduling the PDU set. In this case, the second QoS parameter in the first alternative QoS profile may be configured to replace the second QoS profile based on a priority corresponding to the second QoS parameter in the first alternative QoS profile.

In some other embodiments, the second alternative QoS profile may include at least one of:
a second QoS parameter corresponding to a PDU set;
the first indication; or
seventh information, in which the seventh information is configured to indicate a priority corresponding to the second alternative QoS profile.

Thus, it may be known from the above contents that any one of the first request, the first alternative QoS profile in the first request, and the second alternative QoS profile in the first request may include the first indication. Thus, in some embodiments, the first request may not include the first indication, but the first alternative QoS profile and/or the second alternative QoS profile in the first request include(s) the first indication; or, in some other embodiments, the first request may directly include the first indication, and simultaneously the first alternative QoS profile and/or the second alternative QoS profile in the first request also include(s) the first indication; or, in some other embodiments, the first request may directly include the first indication, but the first alternative QoS profile and/or the second alternative QoS profile in the first request do(es) not include the first indication.

It should also be noted that, in some embodiments, the first QoS profile and the second QoS profile may be configured to replace each other based on at least one of the first indication, a first policy, a local configuration of an access network device, a priority, a first condition, or a second condition; and the first alternative QoS profile and the second alternative QoS profile may be configured to replace each other based on at least one of the first indication, the first policy, the local configuration of the access network device, the priority, a third condition, or a fourth condition. Alternatively, the first policy may be an operator policy.

Alternatively, in some embodiments, the first request may also include a service identifier corresponding to the first service. The service identifier may identify at least one of:
a service data flow of the first service;
a service data flow group of the first service, in which the service data flow group may be configured to identify all data flows in a first service group, and the service data flow group may be, such as, a multi-modal service ID;
a UE address;
a UE Identifier;
an AF identifier application ID;
flow description(s) corresponding to the first service;
a data network name (DNN) corresponding to the first service;
network slice selection assistance information (S-NSSAI) corresponding to the first service; or
a protocol description characteristic, alternatively, the protocol description characteristic being able to include at least one of a media type, use of forward error correction coding, an encryption description, or a multi-stream connection QoS requirement.

In addition, it should be noted that, in some embodiments, the AF may also subscribe to a first event or a second event, in which the first event may be, for example: a QoS profile used by the access network device is replaced, and the second event may be, for example: a transmission resource of the access network device is unable to satisfy a QoS requirement corresponding to the first QoS profile, the second QoS profile, the first alternative QoS profile, or the second alternative QoS profile. The AF needs to be notified when the first event or the second event occurs.

At step 2102, the first network element authorizes the first request.

Alternatively, in some embodiments, since the AF is not a network element of a core network, a situation where an indication name of the same object in the AF is different from an indication name in the core network may occur. Thus, the first network element needs to perform some related mapping to map after receiving the first request sent by the AF, to convert the indication name in the AF to a common indication name in the core network. For example, mapping from a service identifier of the first service to a DNN and S-NSSAI, mapping from an external application to a core network (CN) application identifier, and mapping from an external terminal identifier to a terminal identifier (such as a subscription permanent identifier (SUPI)) within the CN based on a profile of a unified data management (UDM), or mapping from an external first service group identifier to an internal first service group identifier based on the profile of the UDM may be performed.

At step 2103, the first network element sends the first request.

Alternatively, the first network element may send the first request to a second network element, and the second network element may receive the first request. The second network element may be, such as, a PCF network element. For example, the first network element may send the first request to the second network element via an Npcf_PolicyAuthorization_Create request.

Alternatively, the first network element may send the first request directly to the second network element, or the first network element may send the first request to the second network element via a time sensitive communication and time synchronization function (TSCTSF).

It should be noted that, in some embodiments, step 2102 and step 2103 are executed alternatively, which may be executed or not executed. Alternatively, when the AF is a trusted AF, the AF may send the first request directly to the second network element. When the AF is an untrusted AF, step 2102 and step 2103 may be executed.

At step 2104, the second network element determines a first rule based on the first request.

Alternatively, the first rule may include at least one of: the first indication, the first information, the second information, the at least one first alternative QoS profile, the third information, the at least one second alternative QoS profile, or the fourth information.

Alternatively, the first rule may be, such as, a policy and charging control (PCC) rule.

At step 2105, the second network element sends the first rule to a third network element.

Alternatively, the third network element may be, such as, an SMF network element.

Alternatively, the second network element may send the first rule by initiating an SM policy association modification request to the third network element.

Alternatively, in some embodiments, the second network element may also enable a QoS notification control mechanism. The QoS notification control mechanism may, such as, include that the second network element needs to be notified in a case that replacement of a QoS profile used by the access network device occurs, or in a case that a transmission resource of the access network device is unable to satisfy a QoS requirement corresponding to the first QoS profile, the second QoS profile, the first alternative QoS profile, or the second alternative QoS profile.

At step 2106, the second network element sends a first response to the first network element.

Alternatively, the first response may be configured to respond to the first request sent by the first network element to the second network element, and the first response may be, such as, an Npcf_Policy Authorization _Create response.

At step 2107, the first network element sends a second response to the AF.

Alternatively, the second response may be configured to respond to the first request sent by the AF to the first network element, and the first response may be, for example, a Nnef_AFsessionWithQoS_Create response. Alternatively, the second response may be configured to inform the AF that the first request is authorized.

At step 2108, the third network element determines a second rule based on the first rule.

Alternatively, the second rule may be, such as, a QoS rule, and the second rule may include at least one of: the first indication, the first information, the second information, the at least one first alternative QoS profile, the third information, the at least one second alternative QoS profile, or the fourth information.

At step 2109, the third network element sends a third response to the second network element.

Alternatively, the third response may be, such as, an SM policy association modification response.

At step 2110, the third network element sends the second rule to the access network device.

Alternatively, in some embodiments, in a case that the third network element sends information (such as the second rule) to the access network device, the information may be sent to the access network device via an AMF network element on a control plane, or may be sent to the access network device via a UPF network element on a user plane.

Alternatively, the second rule may be, such as, a QoS rule.

It should be noted that, in combination with the above contents, it may be known that in these embodiments of the disclosure, in a case that the AF provides a QoS requirement (or a QoS demand or the first request described above), the AF carries one or more QoS profiles to a core network element, such that the PCF synchronously carries the QoS profile to the SMF in a case that the PCF decides a PCC rule, and finally, the SMF determines the QoS profile in a case that the SMF generates a QoS rule based on the PCC rule, and then sends the QoS profile to the UPF and the RAN (i.e., the access network device) and the terminal, such that the RAN and the terminal perform corresponding processing (such as the replacement of the QoS profile described above) based on the QoS profile." Alternatively, in some other embodiments, the QoS profile may also be generated by the SMF. Alternatively, the SMF may synchronously generate a corresponding QoS profile in a case that the SMF generates the QoS rule based on the PCC rule, and then sends the QoS profile to the UPF and the RAN (i.e., the access network device) and the terminal, such that the RAN and the terminal perform corresponding processing based on the QoS profile.

At step 2111, the access network device replaces a QoS profile used by the access network device based on the second rule.

Alternatively, in some embodiments, a method for the access network device to replace the QoS profile used by the access network device based on the second rule may include: in response to a current transmission resource of the access network device being unable to satisfy a QoS requirement of a currently used QoS profile, the access network device selects a target QoS profile from the first QoS profile, the second QoS profile, the at least one first alternative QoS profile, and the at least one second alternative QoS profile, and replaces the currently used QoS profile with the target QoS profile. Alternatively, a QoS requirement corresponding to the target QoS profile is able to be satisfied by the current transmission resource of the access network device, and the target QoS profile has a maximum priority.

For example, it is assumed that the currently used QoS profile by the access network device is the second QoS profile, and three second alternative QoS profiles exist simultaneously, i.e., second alternative QoS profile #1, second alternative QoS profile #2, and second alternative QoS profile #3. A QoS requirement of the second alternative QoS profile #1 is lower than a QoS requirement of the second QoS profile, and the QoS requirement of the second alternative QoS profile #1 is greater than a QoS requirement of the second alternative QoS profile #2, and the QoS requirement of the second alternative QoS profile #2 is greater than a QoS requirement of the second alternative QoS profile #3. Moreover, a priority of the second alternative QoS profile #1 is greater than a priority of the second alternative QoS profile #2, and the priority of the second alternative QoS profile #2 is greater than a priority of the second alternative QoS profile #3. In this case, when the current transmission resource of the access network device is unable to satisfy the QoS requirement of the second QoS profile, for example, the current transmission resource of the access network device is relatively congested and is not able to satisfy a packet set error rate requirement required by the second QoS profile, a downgrading process may be performed on the QoS requirement. For example, in a case that the current transmission resource of the access network device is able to satisfy the QoS requirement of the second alternative QoS profile #1, the QoS requirement of the second alternative QoS profile #2, and the QoS requirement of the second alternative QoS profile #3, the second alternative QoS profile #1 with the maximum priority may be determined as the target QoS profile, and the currently used QoS profile by the access network device is replaced with the second alternative QoS profile #1, to implement the downgrading process on the QoS.

Alternatively, in some other embodiments, after the first QoS profile used by the access network device is replaced with the first alternative QoS profile (i.e., after the downgrading process is performed), in a case that the transmission resource of the access network device is again able to satisfy the QoS requirement of the first QoS profile, the QoS profile used by the access network device may be replaced back with the first QoS profile. Similarly, after the second QoS profile used by the access network device is replaced with the second alternative QoS profile (i.e., after the downgrading process is performed), in a case that the transmission resource of the access network device is again able to satisfy the QoS requirement of the second QoS profile, the QoS profile used by the access network device may be replaced back with the second QoS profile.

Alternatively, in another embodiment, the method for the access network device to replace the QoS profile used by the access network device based on the second rule may include any one of:
in response to the currently used QoS profile of the access network device being the first QoS profile, in a case that the first condition is satisfied, replacing the first QoS profile with the second QoS profile;
in response to the currently used QoS profile of the access network device being the second QoS profile, in a case that the second condition is satisfied, replacing the second QoS profile with the first QoS profile;
in response to the currently used QoS profile of the access network device being the first alternative QoS profile, in a case that the third condition is satisfied, replacing the first alternative QoS profile with the second alternative QoS profile; or
in response to the currently used QoS profile of the access network device being the second alternative QoS profile, in a case that the fourth condition is satisfied, replacing the second alternative QoS profile with the first alternative QoS profile.

Alternatively, in some other embodiments, the first QoS profile and the second QoS profile may be configured to replace each other based on at least one of the first indication, a first policy, a local configuration of the access network device, a priority, a first condition, or a second condition; and the first alternative QoS profile and the second alternative QoS profile may be configured to replace each other based on at least one of the first indication, the first policy, the local configuration of the access network device, the priority, a third condition, or a fourth condition. Alternatively, the first policy may be an operator policy.

In the above embodiments, in a case that the current transmission resource of the access network device is unable to satisfy the QoS requirement of the currently used QoS profile, the currently used QoS profile may be replaced by the access network device according to the first indication, based on the first QoS profile, the second QoS profile, the first alternative QoS profile, and the second alternative QoS profile, such that the QoS requirement of the replaced QoS profile is able to be satisfied by the current transmission resource of the access network device, thus implementing the dynamic adaptive scheduling of the QoS requirement of the first service, ensuring that the QoS requirement of the first service is able to be guaranteed, enabling the first service to be performed smoothly, and improving the user experience.

Moreover, in the above embodiments, the access network device may replace the currently used QoS profile by the access network device based on the priority of the first alternative QoS profile and/or the priority of the second alternative QoS profile, such that the replaced QoS profile is able to adapt to the current transmission resource of the access network device and also has a relatively high priority, thus ensuring accuracy of replacement of the QoS profile.

At step 2112, the access network device sends a first message or a second message to the third network element.

Alternatively, in some embodiments, in response to the access network device performing replacement of the QoS profile, the access network device may send a first message, in which the first message is configured to indicate at least one of: replacement of a QoS profile, a replaced QoS profile, or a QFI.

Alternatively, in some other embodiments, a second message is sent in response to a transmission resource of the access network device being unable to satisfy a QoS requirement corresponding to the first QoS profile, the second QoS profile, the first alternative QoS profile, or the second alternative QoS profile. The second message may indicate at least one of:
a QFI;
a transmission resource of the access network device being unable to satisfy a QoS requirement corresponding to the first QoS profile, the second QoS profile, the first alternative QoS profile, or the second alternative QoS profile.

Alternatively, the access network device may send the first message or the second message to the third network element via a fourth network element, and the fourth network element may be, such as, an AMF network element. Alternatively, the access network device may transmit the first message or the second message via an N2 message.

Alternatively, in some embodiments, the first message or the second message may be actively reported by the access network device, or may be obtained by the second network element requesting from the third network element, and then the third network element requesting from the access network device.

At step 2113, the third network element sends the first message or the second message to the second network element.

At step 2114, the second network element sends the first message or the second message to the first network element.

At step 2114, the first network element sends the first message or the second message to the AF.

Alternatively, the second network element may also send the first message or the second message directly to the AF.

Thus, it may be known from the above contents that the access network device sends the first message to the core network after the QoS profile is replaced, and the access network device sends the second message to the core network in a case that the transmission resource of the access network device is unable to satisfy the QoS requirements corresponding to the first QoS profile, the second QoS profile, the first alternative QoS profile, and the second alternative QoS profile. The first message is configured to indicate at least one of: the replacement of the QoS profile, the replaced QoS profile, or the QFI; and the second message is configured to indicate at least one of: the QFI, or the transmission resource of the access network device being unable to satisfy the QoS requirement corresponding to the first QoS profile, the second QoS profile, the first alternative QoS profile, or the second alternative QoS profile. Thus, based on the first message or the second message, the core network may be timely aware of the processing status of the QoS profile at the access network device, and the core network also sends the first message or the second message to the AF, thus ensuring alignment of understanding among the AF, the core network, and the access network device on related procedures of the first service, and guaranteeing the stability of the first service.

The communication method in embodiments of the disclosure may include at least one of steps S2101 to S2114. For example, step S2101 may be implemented as an independent embodiment; step S2102 may be implemented as an independent embodiment; and step S2101 + the step S2102 may be implemented as an independent embodiment, which is not limited herein.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

FIG. 3A is a flow chart illustrating an interaction of a communication method according to an embodiment of the disclosure. As illustrated in FIG. 3A, embodiments of the disclosure relate to a communication method, executed by an AF. The communication method includes the following.

At step 3101, a first request is sent.

At step 3102, a first message or a second message is received.

For a detailed description of steps 3101 to 3102, please refer to the description of the above embodiments.

The communication method in embodiments of the disclosure may include at least one of steps S3101 to S3102. For example, step S3101 may be implemented as an independent embodiment; step S3102 may be implemented as an independent embodiment; and step S3101 + step S3102 may be implemented as an independent embodiment, which is not limited herein.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

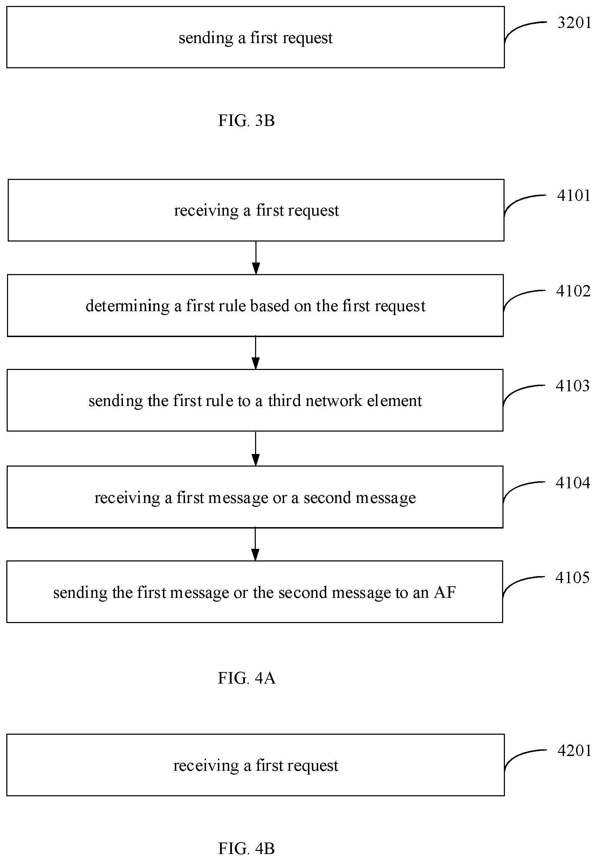

FIG. 3B is a flow chart illustrating an interaction of a communication method according to an embodiment of the disclosure. As illustrated in FIG. 3B, embodiments of the disclosure relate to a communication method, executed by an AF. The communication method includes at least the following.

At step 3201, a first request is sent.

Alternatively, the first request is configured to request a session resource for a first service. The first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the first QoS profile is configured to schedule a PDU in an SDF of the first service, to enable that the PDU satisfies a QoS requirement of the first QoS profile; and the second QoS profile is configured to schedule a PDU set in the SDF of the first service, to enable that the PDU set satisfies a QoS requirement of the second QoS profile.

The first alternative QoS profile is configured to replace the first QoS profile to schedule the PDU, and the second alternative QoS profile is configured to replace the second QoS profile to schedule the PDU set.

The second QoS profile is able to replace the first QoS profile;
the first QoS profile is able to replace the second QoS profile;
the second alternative QoS profile is able to replace the first alternative QoS profile; or
the first alternative QoS profile is able to replace the second alternative QoS profile.

Replacing the first QoS profile with the second QoS profile includes: changing from a first state to a second state.

Replacing the second QoS profile with the first QoS profile includes: changing from the second state to the first state.

Replacing the first alternative QoS profile with the second alternative QoS profile includes: changing from a third state to a fourth state.

Replacing the second alternative QoS profile with the first alternative QoS profile includes: changing from the fourth state to the third state.

The first state includes: scheduling the PDU in the SDF of the first service by using the first QoS profile.

The second state includes: scheduling the PDU set in the SDF of the first service by using the second QoS profile.

The third state includes: scheduling the PDU in the SDF of the first service by using the first alternative QoS profile.

The fourth state includes: scheduling the PDU set in the SDF of the first service by using the second alternative QoS profile.

Alternatively, the first alternative QoS profile includes at least one of:
a first QoS parameter corresponding to the PDU;
a second QoS parameter corresponding to the PDU set;
the first indication;
fifth information, in which the fifth information is configured to indicate a priority corresponding to the first alternative QoS profile; or
sixth information, in which the sixth information is configured to indicate respective priorities corresponding to the first QoS parameter and the second QoS parameter in the first alternative QoS profile.

Alternatively, the second alternative QoS profile includes at least one of:
a second QoS parameter corresponding to a PDU set;
the first indication; or
seventh information, in which the seventh information is configured to indicate a priority corresponding to the second alternative QoS profile.

Alternatively, the PDU set extension function of the first alternative QoS profile includes:
causing a second QoS parameter corresponding to a PDU set to be included in the first alternative QoS profile.

Alternatively, the support function of the second alternative QoS profile includes:
the second alternative QoS profile being independent of the first alternative QoS profile.

Alternatively, the support function of both the first alternative QoS profile and the second alternative QoS profile includes any one of:
the second alternative QoS profile and the first alternative QoS profile being independent of each other and being included in the same profile; or
the second alternative QoS profile and the first alternative QoS profile being independent of each other and not being included in the same profile.

Alternatively, the first indication is further configured for at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

Alternatively, the first QoS profile and the second QoS profile being able to replace each other includes: the first QoS profile and the second QoS profile being able to replace each other based on at least one of the first indication, a first policy, a local configuration of an access network device, a priority, a first condition, or a second condition.

The first alternative QoS profile and the second alternative QoS profile being able to replace each other includes: the first alternative QoS profile and the second alternative QoS profile being able to replace each other based on at least one of the first indication, the first policy, the local configuration of the access network device, the priority, a third condition, or a fourth condition.

Alternatively, the first QoS parameter corresponding to the PDU includes at least one of:
a PDB;
a PER;
a UL-guaranteed bitrate;
a DL-guaranteed bitrate;
an averaging window; or
a maximum data burst volume.

Alternatively, the second QoS parameter corresponding to the PDU set includes at least one of:
a packet set delay budget;
a packet set error rate;
a PSIHI;
a UL-guaranteed bitrate of the PDU set;
a DL-guaranteed bitrate of the PDU set;
an averaging window of the PDU set; or
a maximum data burst volume of the PDU set.

Alternatively, the first request also includes a service identifier corresponding to the first service.

Alternatively, sending the first request includes:
sending the first request to a second network element via a first network element.

Alternatively, the method also includes:
receiving a first message or a second message;

The first message is configured to indicate at least one of: replacement of a QoS profile, a replaced QoS profile, or a QFI.

The second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

For a detailed description of step 3201, please refer to the description of the above embodiments.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

FIG. 4A is a flow chart illustrating an interaction of a communication method according to an embodiment of the disclosure. As illustrated in FIG. 4A, embodiments of the disclosure relate to a communication method, executed by a second network element. The communication method includes the following.

At step 4101, a first request is received.

At step 4102, a first rule is determined based on the first request.

At step 4103, the first rule is sent to a third network element.

At step 4104, a first message or a second message is received.

At step 4105, the first message or the second message is sent to an AF.

For a detailed description of steps 4101 to 4105, please refer to the description of the above embodiments.

The communication method in embodiments of the disclosure may include at least one of steps S4101 to S4105. For example, step S4101 may be implemented as an independent embodiment; and step S4102 may be implemented as an independent embodiment, which is not limited herein.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

FIG. 4B is a flow chart illustrating an interaction of a communication method according to an embodiment of the disclosure. As illustrated in FIG. 4B, embodiments of the disclosure relate to a communication method. The method is executed by a second network element, and includes at least the following step S4201.

At step 4201, a first request is received.

Alternatively, the first request is configured to request a session resource for a first service. The first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the method also includes:
determining a first rule based on the first request, in which the first rule includes at least one of: the first indication, the first information, the second information, at least one first alternative QoS profile, the third information, at least one second alternative QoS profile, or the fourth information; and
sending the first rule to a third network element.

Alternatively, the method also includes:
receiving a first message or a second message, in which the first message is configured to indicate at least one of: replacement of a QoS profile, a replaced QoS profile, or a QFI; and the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to an AF.

For a detailed description of step 4201, please refer to the description of the above embodiments.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

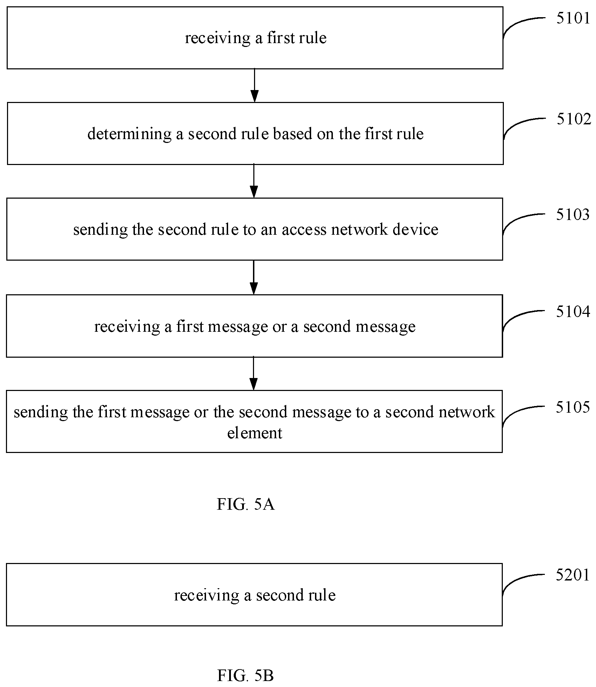

FIG. 5A is a flow chart illustrating an interaction of a communication method according to an embodiment of the disclosure. As illustrated in FIG. 5A, embodiments of the disclosure relate to a communication method, executed by a third network element. The communication method includes the following.

At step 5101, a first rule is received.

At step 5102, a second rule is determined based on the first rule.

At step 5103, the second rule is sent to an access network device.

At step 5104, a first message or a second message is received.

At step 5105, the first message or the second message is sent to a second network element.

For a detailed description of steps 5101 to 5105, please refer to the description of the above embodiments.

The communication method in embodiments of the disclosure may include at least one of steps S5101 to S5105. For example, step S5101 may be implemented as an independent embodiment; and step S5102 may be implemented as an independent embodiment, which is not limited herein.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

FIG. 5B is a flow chart illustrating an interaction of a communication method according to an embodiment of the disclosure. As illustrated in FIG. 5B, embodiments of the disclosure relate to a communication method, executed by a third network element. The communication method includes the following.

At step 5201, a first rule is received.

Alternatively, the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the method also includes:
determining a second rule based on the first rule, in which the second rule includes at least one of: the first indication, the first information, the second information, at least one first alternative QoS profile, the third information, at least one second alternative QoS profile, or the fourth information; and
sending the second rule to an access network device.

Alternatively, the method also includes:
receiving a first message or a second message, in which the first message is configured to indicate at least one of: replacement of a QoS profile, a replaced QoS profile, or a QFI; and the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to a second network element.

For a detailed description of step 5201, please refer to the description of the above embodiments.

In this implementation or embodiment, without conflict, respective steps may be executed independently, in an arbitrarily combination, or in an exchanged order. Alternative implementations or alternative examples may be arbitrarily combined, and may also be arbitrarily combined with any steps from other implementations or other embodiments.

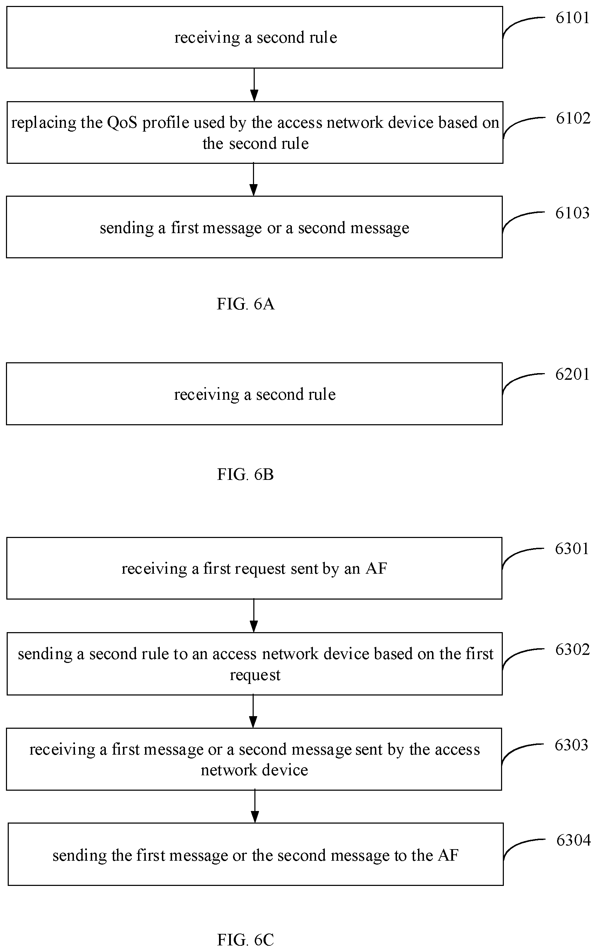

FIG. 6A is a flow chart illustrating an interaction of a communication method according to an embodiment of the disclosure. As illustrated in FIG. 6A, embodiments of the disclosure relate to a communication method, executed by an access network device. The communication method includes the following.

At step 6101, a second rule is received.

At step 6102, a QoS profile used by the access network device is replaced based on the second rule.

At step 6103, a first message or a second message is sent.

For a detailed description of steps 6101 to 6103, please refer to the description of the above embodiments.

The communication method in embodiments of the disclosure may include at least one of steps S6101 to S6103. For example, step S6101 may be implemented as an independent embodiment; and step S6102 may be implemented as an independent embodiment, which is not limited herein.

In this implementation or embodiment, without conflict, respective steps may be executed independently, in an arbitrarily combination, or in an exchanged order. Alternative implementations or alternative examples may be arbitrarily combined, and may also be arbitrarily combined with any steps from other implementations or other embodiments.

FIG. 6B is a flow chart illustrating an interaction of a communication method according to an embodiment of the disclosure. As illustrated in FIG. 6B, embodiments of the disclosure relate to a communication method, executed by an access network device. The communication method includes the following.

At step 6201, a second rule is received.

Alternatively, the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the method also includes:
in response to a current transmission resource of the access network device being unable to satisfy a QoS requirement of a currently used QoS profile, selecting a target QoS profile from the first QoS profile, the second QoS profile, at least one first alternative QoS profile, and at least one second alternative QoS profile, in which a QoS requirement corresponding to the target QoS profile is able to be satisfied by the current transmission resource of the access network device, and the target QoS profile has a maximum priority; and
replacing the currently used QoS profile with the target QoS profile.

Alternatively, the first indication is also configured for at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

Alternatively, the method also includes:
in response to the currently used QoS profile of the access network device being the first QoS profile, in a case that the first condition is satisfied, replacing the first QoS profile with the second QoS profile;
in response to the currently used QoS profile of the access network device being the second QoS profile, in a case that the second condition is satisfied, replacing the second QoS profile with the first QoS profile;
in response to the currently used QoS profile of the access network device being the first alternative QoS profile, in a case that the third condition is satisfied, replacing the first alternative QoS profile with the second alternative QoS profile; or
in response to the currently used QoS profile of the access network device being the second alternative QoS profile, in a case that the fourth condition is satisfied, replacing the second alternative QoS profile with the first alternative QoS profile.

Alternatively, the method also includes:
in response to the access network device performing replacement of a QoS profile, sending a first message, in which the first message is configured to indicate at least one of: replacement of a QoS profile, a replaced QoS profile, or a QFI; or
in response to a transmission resource of the access network device being unable to satisfy a QoS requirement corresponding to the first QoS profile, the second QoS profile, the first alternative QoS profile, or the second alternative QoS profile, sending a second message, in which the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

For a detailed description of step 6201, please refer to the description of the above embodiments.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

FIG. 6C is a flow chart illustrating an interaction of a communication method according to an embodiment of the disclosure. As illustrated in FIG. 6C, embodiments of the disclosure relate to a communication method, executed by a core network functional node. The communication method includes the following.

At step 6301, a first request sent by an AF is received.

At step 6302, a second rule is sent to an access network device based on the first request.

At step 6303, a first message or a second message sent by the access network device is received.

At step 6304, the first message or the second message is sent to the AF.

For a detailed description of steps 6301 to 6304, please refer to the description of the above embodiments.

The communication method in embodiments of the disclosure may include at least one of steps S6301 to S6304. For example, step S6301 may be implemented as an independent embodiment; and step S6301 + the step S6302 may be implemented as an independent embodiment, which is not limited herein.

In this implementation or embodiment, without conflict, respective steps may be executed independently, in an arbitrary combination, or in an exchanged order. Alternative implementations or alternative examples may be arbitrarily combined, and may also be arbitrarily combined with any steps from other implementations or other embodiments.

The following is an exemplary introduction to the above method.

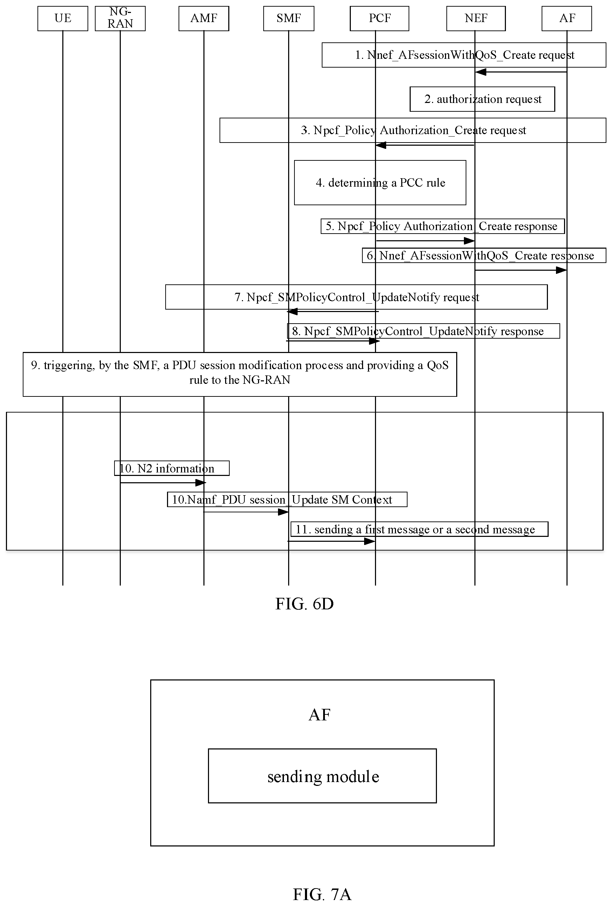

FIG. 6D is a flow chart illustrating an interaction of a communication method according to an embodiment of the disclosure. As illustrated in FIG. 6D, the method may include the following steps.
1. An AF sends an AF session resource request (i.e., the first request described above), for example, send the AF session resource request (or referred to as an AF request) via a Nnef_AFsessionWithQoS_Create request.

Alternatively, the AF may provide a flexibility indication (i.e., the first indication described above) of PDU QoS processing and PDU set QoS processing to a 5GC for determining a PCC rule (i.e., the first rule described above). In addition, the AF may also provide an alternative QoS profile (i.e., the first alternative QoS described above) and an alternative PDU set QoS profile (i.e., the second alternative QoS profile described above). Alternatively, the AF may also subscribe to a notification of the alternative QoS profile and/or the alternative PDU set QoS profile (i.e., the first event described above), and/or a notification that all alternative profiles are not able to be satisfied (an alternative QoS profile with a minimum priority and an alternative PDU set QoS profile are not able to be satisfied) (i.e., the second event described above).

Alternatively, the flexibility indication of PDU QoS processing and PDU set QoS processing described above may indicate at least one of the following:
implementing flexibility of PDU QoS processing and PDU set QoS processing (i.e., enabling the first function described above), that is, the alternative QoS profile or the alternative PDU set QoS profile may overlap each other based on the indication or an operator policy/local configuration;
the alternative PDU set QoS profile overlapping (i.e., "replacing" described above) the alternative QoS profile;
the alternative QoS profile overlapping the alternative PDU set QoS profile; or
the alternative QoS profile or the alternative PDU set QoS profile being able to overlap each other based on priorities of related profiles.

Alternatively, in addition to providing the flexibility indication of the PDU QoS processing and the PDU set QoS processing, the alternative QoS profile, the alternative PDU set QoS profile, a QoS reference, or a separate QoS parameter, the AF may also provide respective priorities (i.e., the third information and the fourth information described above) corresponding to the alternative QoS profile and the alternative PDU set QoS profile.

Alternatively, for the alternative QoS profile and the alternative PDU set QoS profile, when the AF provides one or more QoS references of the alternative QoS profile and the alternative PDU set QoS profile to a network, the one or more QoS references are arranged in a priority order. When the AF provides one or more separate QoS parameters of the alternative QoS profile and the alternative PDU set QoS profile to the network, the one or more alternative QoS parameters of the PDU and the PDU set are arranged in a priority order.

Each alternative QoS profile and alternative PDU set QoS profile requested includes the following separate parameters:
a PDB;
a PER;
a packet set delay budget;
a packet set error rate;
a PSIHI;
a UL-guaranteed bitrate;
a DL-guaranteed bitrate;
an averaging window;
a maximum data burst volume; or
a flexibility indication of the PDU QoS processing and the PDU set QoS processing.

Alternatively, the AF session resource request may also carry XRM service information (such as, a multi-modal service identifier (ID)) for identifying an XRM service data flow or an XRM service data flow group, a UE address/UE identifier, an AF identifier application, a flow description, a DNN, S-NSSAI, a QoS parameter, a protocol description characteristic (including a media type, use of forward error correction coding, an encryption description, or a multi-stream connection QoS requirement), and other corresponding information. The multi-modal service ID may be configured to identify all flows in the XRM service data flow group.

2. The NEF authorizes the AF request. In a case that the AF is an untrusted AF, the request of the AF is sent to a PCF via the NEF. Alternatively, the NEF performs related mapping, including mapping from an identifier of an XRM service (AF-Service-Identifier) to a DNN and S-NSSAI, mapping from an external application identifier to a CN application identifier; and mapping from an external UE identifier to a UE identifier within the CN (such as a SUPI) based on a profile of a UDM, and mapping from an external XRM service group identifier to an internal XRM service group identifier based on the profile of the UDM.

3. The NEF determines, based on the parameter provided by the AF, whether to call a TSCTSF to send the parameter to the PCF, or to directly send the parameter to the PCF. The PCF receives, from the NEF or the TSCTSF, the attribute (i.e., the information provided by the AF described at step 1 above) provided by the AF.

The NEF triggers an Npcf_PolicyAuthorization_Create request, and sends the AF session resource request to the PCF, carrying the indication and QoS requirement information (i.e., the information provided by the AF described at step 1 above) for policy decision of the PCF.

4. The PCF determines a PCC rule.

Alternatively, the PCF may determine that updated or new policy information (i.e., the PCC rule) needs to be sent to an SMF.

Alternatively, the PCF may determine the PCC rule based on the flexibility indication of the PDU QoS processing and the PDU set QoS processing, and send the PCC rule to the SMF. The PCC rule may carry the flexibility indication of the PDU QoS processing and the PDU set QoS processing.

Alternatively, the PCF may determine the alternative QoS profile and the alternative PDU set QoS profile of the PCC rule based on the QoS reference parameters or the QoS parameter sets in the alternative QoS profile and the alternative PDU set QoS profile in the AF request.

Alternatively, based on the flexibility indication of the PDU QoS processing and the PDU set QoS processing, the PCF may arrange the determined alternative QoS profile and alternative PDU set QoS profile in the same priority order indicated by the AF, cause the alternative QoS profile and the alternative PDU set QoS profile to be included in the PCC rule, and send the PCC rule to the SMF.

Alternatively, the PCF may enable QoS notification control. The PCF is notified in a case that a transmission resource of an access network device is not able to satisfy a QoS requirement of any QoS profile, or the PCF is notified in a case that a QoS profile of the access network device is overlapped.

5. The PCF responds to the NEF with an Npcf_Policy Authorization_Create response.

6. The NEF sends a Nnef_AFsessionWithQoS_Create response message to the AF.

7. The PCF initiates an Npcf_SMPolicyControl_UpdateNotify request to the SMF.

Alternatively, the Npcf_SMPolicyControl_UpdateNotify request includes the PCC rule.

Alternatively, in a case that the SMF receives the PCC rule, the SMF may determine a QoS rule (i.e., the second rule described above) based on the PCC rule, to configure/activate the rule to a UPF (for example, via an N4 session).

Alternatively, the SMF may provide the flexibility indication of the PDU QoS processing and the PDU set QoS processing to an NG-RAN to indicate QoS implementation.

Alternatively, the SMF derives a QoS parameter of a QoS flow based on PCC rule information in the PCC rule bound to the QoS flow.

Alternatively, in a case that the PCC rule includes the alternative QoS profile and the alternative PDU set QoS profile, the SMF may also arrange the alternative QoS profile and the alternative PDU set QoS profile in a priority order. Moreover, the SMF shall also provide a priority list of the alternative QoS profile and the alternative PDU set QoS profile to the NG-RAN.

8. The SMF replies to the PCF with an Npcf_SMPolicyControl_UpdateNotify response.

9. The SMF may trigger a PDU session modification procedure to provide the QoS rule to the NG-RAN.

Alternatively, in a case that the SMF provides a new priority list of the alternative QoS profile and the alternative PDU set QoS profile to the NG-RAN, the NG-RAN may replace a previously stored priority list of the alternative QoS profile and the alternative PDU set QoS profile with the new priority list.

Alternatively, when a QoS requirement of a current QoS profile may not be satisfied, the NG-RAN may consider the flexibility indication of PDU QoS processing and PDU set QoS processing to select an alternative QoS profile whose QoS requirement is able to be satisfied.

10. In a case that notification control related to a PDU set is configured for a QoS flow, when a (R)AN (i.e., the access network device described above) determines that a PDU set QoS target of the QoS flow is not able to be satisfied or is able to be satisfied again, the (R) AN sends an N2 message (including a PDU session ID and N2 SM information) to the SMF.

Alternatively, the N2 message respectively includes a QFI and an indication that the QoS target of the QoS flow is not able to be satisfied or is able to be satisfied again. In this case, the N2 information is equivalent to the first message described above. Alternatively, in a case that the QoS targets corresponding to the PDU QoS profile, the PDU set QoS profile, the alternative QoS profile, and the alternative PDU set QoS profile may not be achieved, the N2 message indicates that the QoS targets corresponding to the PDU QoS profile, the PDU set QoS profile, the alternative QoS profile, and the alternative PDU set QoS profile is not able to be satisfied. In this case, the N2 message is equivalent to the second message described above.

Alternatively, the (R)AN may send the N2 message to an AMF, and then the AMF calls an Nsmf_PDU session_UpdateSMContext to send the N2 message to the SMF.

11. In a case that the PCF subscribes to the event, the SMF may report the event to the PCF.

Alternatively, the event may be, for example: the QoS target of the QoS flow is not able to be satisfied or is able to be satisfied again, or each of the QoS targets corresponding to the PDU QoS profile, the PDU set QoS profile, the alternative QoS profile, and the alternative PDU set QoS profile is not able to be satisfied.

Embodiments of the disclosure also provide an apparatus for implementing any one of the above methods. For example, an apparatus is provided, including units or modules for implementing the steps executed by the terminal in any one of the above methods. For example, another apparatus is provided, including units or modules for implementing the steps executed by the network device (such as, an access network device, a core network node, a core network device, etc.) in any one of the above methods.

It should be understood that a division of units or modules in the above apparatus is only a division of logical functions. In actual implementations, the units or modules may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, such as, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. For another example, in another implementation, the hardware circuit may be implemented by a programmable logic device (PLD). Taking a field-programmable gate array (FPGA) as an example, the hardware circuit may include a large number of logic gate circuits. The connection relationships between the logic gate circuits are configured via profiles to implement the functions of some or all units or modules. All units or modules of the above apparatus may be fully implemented in the form of the processor calling software, or fully implemented in the form of the hardware circuit, or partially implemented in the form of the processor calling software and partially implemented in the form of the hardware circuit.

In the embodiments of the disclosure, the processor is a circuit with a signal processing capability. In an implementation, the processor may be a circuit with a capability of reading and running instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits, and the logical relationship of the hardware circuit is fixed or reconstructed, for example, the processor is a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, the processor may also be a hardware circuit designed for artificial intelligence, which may be understood as an ASIC, such as a neural network processing unit (NPU), a tensor processing unit (TPU), a deep learning processing unit (DPU), etc.

FIG. 7A is a block diagram illustrating an AF according to an embodiment of the disclosure. As illustrated in FIG. 7A, the AF includes:
a sending module, configured to send a first request, in which the first request is configured to request a session resource for a first service. The first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the first QoS profile is configured to schedule a PDU in an SDF of the first service, to enable that the PDU satisfies a QoS requirement of the first QoS profile; and the second QoS profile is configured to schedule a PDU set in the SDF of the first service, to enable that the PDU set satisfies a QoS requirement of the second QoS profile.

The first alternative QoS profile is configured to replace the first QoS profile to schedule the PDU, and the second alternative QoS profile is configured to replace the second QoS profile to schedule the PDU set.

The second QoS profile is able to replace the first QoS profile;
the first QoS profile is able to replace the second QoS profile;
the second alternative QoS profile is able to replace the first alternative QoS profile; or
the first alternative QoS profile is able to replace the second alternative QoS profile.

Replacing the first QoS profile with the second QoS profile includes: changing from a first state to a second state.

Replacing the second QoS profile with the first QoS profile includes: changing from the second state to the first state.

Replacing the first alternative QoS profile with the second alternative QoS profile includes: changing from a third state to a fourth state.

Replacing the second alternative QoS profile with the first alternative QoS profile includes: changing from the fourth state to the third state.

The first state includes: scheduling the PDU in the SDF of the first service by using the first QoS profile.

The second state includes: scheduling the PDU set in the SDF of the first service by using the second QoS profile.

The third state includes: scheduling the PDU in the SDF of the first service by using the first alternative QoS profile.

The fourth state includes: scheduling the PDU set in the SDF of the first service by using the second alternative QoS profile.

Alternatively, the first alternative QoS profile includes at least one of:
a first QoS parameter corresponding to the PDU;
a second QoS parameter corresponding to the PDU set;
the first indication;
fifth information, in which the fifth information is configured to indicate a priority corresponding to the first alternative QoS profile; or
sixth information, in which the sixth information is configured to indicate respective priorities corresponding to the first QoS parameter and the second QoS parameter in the first alternative QoS profile.

Alternatively, the second alternative QoS profile includes at least one of:
a second QoS parameter corresponding to a PDU set;
the first indication;
seventh information, in which the seventh information is configured to indicate a priority corresponding to the second alternative QoS profile.

Alternatively, the PDU set extension function of the first alternative QoS profile includes:
causing a second QoS parameter corresponding to a PDU set to be included in the first alternative QoS profile.

Alternatively, the support function of the second alternative QoS profile includes:
the second alternative QoS profile being independent of the first alternative QoS profile.

Alternatively, the support function of both the first alternative QoS profile and the second alternative QoS profile includes any one of:
the second alternative QoS profile and the first alternative QoS profile being independent of each other and being included in the same profile; or
the second alternative QoS profile and the first alternative QoS profile being independent of each other and not being included in the same profile.

Alternatively, the first indication is also configured for at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

Alternatively, the first QoS profile and the second QoS profile being able to replace each other includes: the first QoS profile and the second QoS profile being able to replace each other based on at least one of the first indication, a first policy, a local configuration of an access network device, a priority, a first condition, or a second condition; and
the first alternative QoS profile and the second alternative QoS profile being able to replace each other includes: the first alternative QoS profile and the second alternative QoS profile being able to replace each other based on at least one of the first indication, the first policy, the local configuration of the access network device, the priority, a third condition, or a fourth condition.

Alternatively, the first QoS parameter corresponding to the PDU includes at least one of:
a PDB;
a PER;
a UL-guaranteed bitrate;
a DL-guaranteed bitrate;
an averaging window; or
a maximum data burst volume.

Alternatively, the second QoS parameter corresponding to the PDU set includes at least one of:
a packet set delay budget;
a packet set error rate;
a PSIHI;
a UL-guaranteed bitrate of the PDU set;
a DL-guaranteed bitrate of the PDU set;
an averaging window of the PDU set; or
a maximum data burst volume of the PDU set.

Alternatively, the first request also includes a service identifier corresponding to the first service.

Alternatively, the sending module is also configured to:
send the first request to a second network element via a first network element.

Alternatively, the AF also includes:
a receiving module, configured to receive a first message or a second message.

The first message is configured to indicate at least one of: replacement of a QoS profile, a replaced QoS profile, or a QFI; and
the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

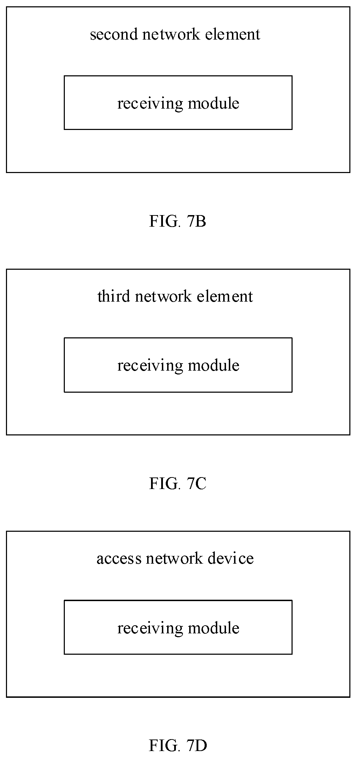

FIG. 7B is a block diagram illustrating a second network element according to an embodiment of the disclosure. As illustrated in FIG. 7B, the second network element includes:
a receiving module, configured to receive a first request, in which the first request is configured to request a session resource for a first service. The first request includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the second network element also includes:
a processing module, configured to determine a first rule based on the first request, in which the first rule includes at least one of: the first indication, the first information, the second information, at least one first alternative QoS profile, the third information, at least one second alternative QoS profile, or the fourth information; and
a sending module, configured to send the first rule to a third network element.

Alternatively, the receiving module is also configured to receive a first message or a second message, in which the first message is configured to indicate at least one of: replacement of a QoS profile, a replaced QoS profile, or a QFI; and the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

Alternatively, the sending module is also configured to send the first message or the second message to an AF.

FIG. 7C is a block diagram illustrating a third network element according to an embodiment of the disclosure. As illustrated in FIG. 7C, the third network element includes:
a receiving module, configured to receive a first rule, in which the first rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the third network element also includes:
a processing module, configured to determine a second rule based on the first rule, in which the second rule includes at least one of: the first indication, the first information, the second information, at least one first alternative QoS profile, the third information, at least one second alternative QoS profile, or the fourth information; and
a sending module, also configured to send the second rule to an access network device.

Alternatively, the receiving module is also configured to receive a first message or a second message, in which the first message is configured to indicate at least one of: replacement of a QoS profile, a replaced QoS profile, or a QFI; and the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

Alternatively, the sending module is also configured to send the first message or the second message to a second network element.

FIG. 7D is a block diagram illustrating an access network device according to an embodiment of the disclosure. As illustrated in FIG. 7D, the access network device includes:
a receiving module, configured to receive a second rule, in which the second rule includes at least one of: first information indicating a first QoS profile corresponding to a PDU, second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile.

The first alternative QoS profile is configured to replace the first QoS profile, and the second alternative QoS profile is configured to replace the second QoS profile.

The first indication is configured for at least one of:
enabling a first function, in which the first function includes at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

Alternatively, the access network device also includes:
a processing module, also configured to: in response to a current transmission resource of the access network device being unable to satisfy a QoS requirement of a currently used QoS profile, select a target QoS profile from the first QoS profile, the second QoS profile, the at least one first alternative QoS profile, and the at least one second alternative QoS profile, in which a QoS requirement corresponding to the target QoS profile is able to be satisfied by the current transmission resource of the access network device, and the target QoS profile has a highest priority.

The processing module is also configured to replace the currently used QoS profile with the target QoS profile.

Alternatively, the first indication is also configured for at least one of:
indicating a first condition, in which the first condition is a condition that needs to be satisfied when the second QoS profile is able to replace the first QoS profile;
indicating a second condition, in which the second condition is a condition that needs to be satisfied when the first QoS profile is able to replace the second QoS profile;
indicating a third condition, in which the third condition is a condition that needs to be satisfied when the second alternative QoS profile is able to replace the first alternative QoS profile; or
indicating a fourth condition, in which the fourth condition is a condition that needs to be satisfied when the first alternative QoS profile is able to replace the second alternative QoS profile.

Alternatively, the processing module is further configured for any one of:
in response to the currently used QoS profile of the access network device being the first QoS profile, in a case that the first condition is satisfied, replacing the first QoS profile with the second QoS profile;
in response to the currently used QoS profile of the access network device being the second QoS profile, in a case that the second condition is satisfied, replacing the second QoS profile with the first QoS profile;
in response to the currently used QoS profile of the access network device being the first alternative QoS profile, in a case that the third condition is satisfied, replacing the first alternative QoS profile with the second alternative QoS profile; or
in response to the currently used QoS profile of the access network device being the second alternative QoS profile, in a case that the fourth condition is satisfied, replacing the second alternative QoS profile with the first alternative QoS profile.

Alternatively, the access network device also includes:
a sending module, configured to: in response to the access network device performing replacement of a QoS profile, send a first message, in which the first message is configured to indicate at least one of: replacement of a QoS profile, a replaced QoS profile, or a QFI; or
the sending module is also configured to: in response to a transmission resource of the access network device being unable to satisfy a QoS requirement corresponding to the first QoS profile, the second QoS profile, the first alternative QoS profile, or the second alternative QoS profile, send a second message, in which the second message is configured to indicate at least one of: a QFI, or a transmission resource of an access network device being unable to satisfy a QoS requirement corresponding to the first QoS profile, the second QoS profile, the first alternative QoS profile, or the second alternative QoS profile.

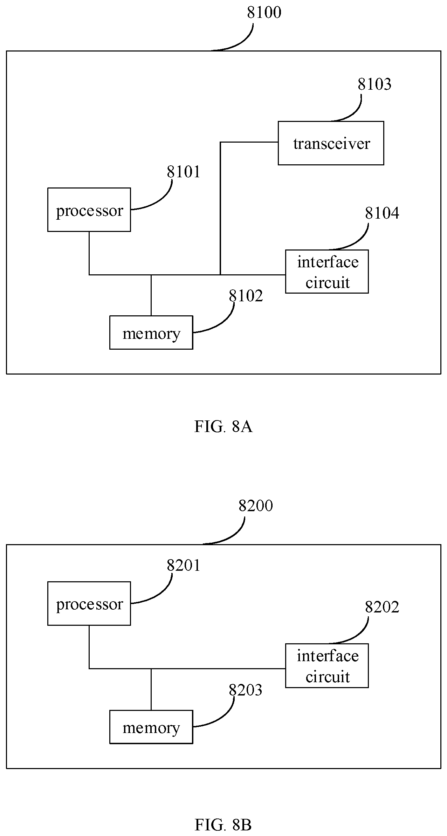

FIG. 8A is a block diagram illustrating a communication device 8100 according to an embodiment of the disclosure. The communication device 8100 may be a network device (such as an access network device, a core network function node, etc.), or a terminal (such as a UE, etc.), or a chip, a chip system, a processor, etc. that supports a first device to implement any one of the methods, or a chip, a chip system, a processor, etc. that supports the terminal to implement any one of the methods. The communication device 8100 may be configured to implement the method in the above method embodiments. For details, please refer to the description in the above method embodiments.

As illustrated in FIG. 8A, the communication device 8100 may include one or more processors 8101. The processor 8101 may be a general purpose processor or a special purpose processor, such as, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The processor 8101 is configured to call instructions to cause communication device 8100 to execute any one of the above methods.

Alternatively, the communication device 8100 also includes one or more memories 8102 for storing instructions. Alternatively, all or some of the memories 8102 may also be located outside the communication device 8100.

In some embodiments, the communication device 8100 also includes one or more transceivers 8103. When the communication device 8100 includes one or more transceivers 8103, the communication steps such as sending and/or receiving in the above method are executed by the transceiver 8103, and other steps is executed by the processor 8101.

In some embodiments, the transceiver may include a receiver and a transmitter, and the receiver and the transmitter may be separate or integrated together. Alternatively, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 8100 also includes one or more interface circuits 8104. Alternatively, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a terminal, but a scope of the communication device 8100 in the disclosure is not limited to this, and a structure of the communication device 8100 may not be limited by FIG. 8A. The communication device may be an independent device or a part of a large device. For example, the communication device may be: 1) an independent IC, or a chip, or a chip system or a subsystem; 2) a collection including one or more IC, alternatively, the IC collection being also able to include storage components for storing data and computer programs; 3) an ASIC, such as a modem; 4) modules embedded in other devices; 5) a receiver, an IoT device, an intelligent IoT device, a cellular phone, a wireless device, a handheld phone, a mobile unit, a vehicle-mounted device, a network device, a cloud device, an artificial intelligence device, etc.; 6) others.

FIG. 8B is a block diagram illustrating a chip 8200 according to an embodiment of the disclosure. For a case where the communication device 8100 may be a chip or a chip system, please refer to the block diagram of the chip 8200 illustrated in FIG. 8B, but not limited to this.

The chip 8200 includes one or more processors 8201. The one or more processors 8201 are configured to call instructions to cause the chip 8200 to execute any of the above methods.

In some embodiments, the chip 8200 also includes one or more interface circuits 8202. The interface circuit 8202 is connected to a memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201. Alternatively, the terms such as interface circuit, interface, transceiver pin, transceiver, etc. may be used interchangeably.

In some embodiments, the chip 8200 also includes one or more memories 8203 for storing instructions. Alternatively, all or some of the memories 8203 may be located outside the chip 8200.

The disclosure also provides a storage medium for storing instructions. When the instructions are run on the communication device 8100, the communication device 8100 is caused to execute any one of the above methods. Alternatively, the above storage medium is an electronic storage medium. Alternatively, the above storage medium is a computer-readable storage medium, which is not limited to this, and the above storage medium may also be a storage medium readable by other devices. Alternatively, the above storage medium may be a non-transitory storage medium, which is not limited to this, and the above storage medium may also be a transitory storage medium.

The disclosure also provides a program product. When the program product is executed by the communication device 8100, the communication device 8100 is caused to execute any one of the above methods. Alternatively, the above program product is a computer program product.

The disclosure also provides a computer program. When the computer program is run on a computer, the computer is caused to execute any one of the above methods.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer, or be a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, in combination with units and algorithm steps of the examples described in embodiments of the disclosure, the technical solution may be implemented by electronic hardware or a combination of electronic hardware and computer software. Whether the functions are executed by hardware or software depends on a specific application and a design constraint of the technical solution. Those skilled in the art may employ different methods for each specific application to implement the described functions, but such implementation should not be considered as going beyond the scope of the disclosure.

Those skilled in the related art may clearly understand that a detailed working process of a system, an apparatus and a unit described above may refer to a corresponding process in the above method embodiments, which is not repeated herein.

The above are only implementations of the disclosure. However, the protection scope of the disclosure is not limited herein. Changes and substitutions that may be easily considered by those skilled in the art shall be contained within the protection scope of the disclosure. Thus, the protection scope of the disclosure shall be subject to the protection scope of claims.

## Claims

1. A communication method, executed by an application function (AF), comprising:
sending a first request, wherein the first request is configured to request a session resource for a first service; the first request comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

2. The method according to claim 1, wherein the first QoS profile is configured to schedule a PDU in a service data flow (SDF) of the first service, to enable that the PDU satisfies a QoS requirement of the first QoS profile; and the second QoS profile is configured to schedule a PDU set in the SDF of the first service, to enable that the PDU set satisfies a QoS requirement of the second QoS profile.

3. The method according to claim 1 or 2, wherein the second QoS profile is able to replace the first QoS profile;
the first QoS profile is able to replace the second QoS profile;
the second alternative QoS profile is able to replace the first alternative QoS profile; or
the first alternative QoS profile is able to replace the second alternative QoS profile;
wherein replacing the first QoS profile with the second QoS profile comprises: changing from a first state to a second state;
replacing the second QoS profile with the first QoS profile comprises: changing from the second state to the first state;
replacing the first alternative QoS profile with the second alternative QoS profile comprises: changing from a third state to a fourth state;
replacing the second alternative QoS profile with the first alternative QoS profile comprises: changing from the fourth state to the third state;
wherein the first state comprises: scheduling the PDU in the SDF of the first service by using the first QoS profile;
the second state comprises: scheduling the PDU set in the SDF of the first service by using the second QoS profile;
the third state comprises: scheduling the PDU in the SDF of the first service by using the first alternative QoS profile;
the fourth state comprises: scheduling the PDU set in the SDF of the first service by using the second alternative QoS profile.

4. The method according to any one of claims 1 to 3, wherein the first alternative QoS profile comprises at least one of:
a first QoS parameter corresponding to the PDU;
a second QoS parameter corresponding to the PDU set;
the first indication;
fifth information, wherein the fifth information indicates a priority corresponding to the first alternative QoS profile; or
sixth information, wherein the sixth information indicates respective priorities corresponding to the first QoS parameter and the second QoS parameter in the first alternative QoS profile.

5. The method according to any one of claims 1 to 4, wherein the second alternative QoS profile comprises at least one of:
a second QoS parameter corresponding to a PDU set;
the first indication; or
seventh information, wherein the seventh information indicates a priority corresponding to the second alternative QoS profile.

6. The method according to any one of claims 1 to 5, wherein the PDU set extension function of the first alternative QoS profile comprises:
causing a second QoS parameter corresponding to a PDU set to be comprised in the first alternative QoS profile.

7. The method according to any one of claims 1 to 6, wherein the support function of the second alternative QoS profile comprises:
the second alternative QoS profile being independent of the first alternative QoS profile.

8. The method according to any one of claims 1 to 7, wherein the support function of both the first alternative QoS profile and the second alternative QoS profile comprises any one of:
the second alternative QoS profile and the first alternative QoS profile being independent of each other and being comprised in the same profile; or
the second alternative QoS profile and the first alternative QoS profile being independent of each other and not being comprised in the same profile.

9. The method according to any one of claims 1 to 8, wherein the first indication is further configured for at least one of:
indicating a first condition, wherein the first condition is a condition that needs to be satisfied when the second QoS profile is able to replace the first QoS profile;
indicating a second condition, wherein the second condition is a condition that needs to be satisfied when the first QoS profile is able to replace the second QoS profile;
indicating a third condition, wherein the third condition is a condition that needs to be satisfied when the second alternative QoS profile is able to replace the first alternative QoS profile; or
indicating a fourth condition, wherein the fourth condition is a condition that needs to be satisfied when the first alternative QoS profile is able to replace the second alternative QoS profile.

10. The method according to any one of claims 1 to 9, wherein the first QoS profile and the second QoS profile being able to replace each other comprises: the first QoS profile and the second QoS profile being able to replace each other based on at least one of the first indication, a first policy, a local configuration of an access network device, a priority, a first condition, or a second condition;
the first alternative QoS profile and the second alternative QoS profile being able to replace each other comprises: the first alternative QoS profile and the second alternative QoS profile being able to replace each other based on at least one of the first indication, the first policy, the local configuration of the access network device, the priority, a third condition, or a fourth condition.

11. The method according to any one of claims 4 to 10, wherein the first QoS parameter corresponding to the PDU comprises at least one of:
a packet delay budget (PDB);
a packet error rate (PER);
an uplink (UL)-guaranteed bitrate;
a downlink (DL)-guaranteed bitrate;
an averaging window; or
a maximum data burst volume.

12. The method according to any one of claims 4 to 11, wherein the second QoS parameter corresponding to the PDU set comprises at least one of:
a packet set delay budget;
a packet set error rate;
a PDU set integrated handling information (PSIHI);
an uplink (UL)-guaranteed bitrate of the PDU set;
a downlink (DL)-guaranteed bitrate of the PDU set;
an averaging window of the PDU set; or
a maximum data burst volume of the PDU set.

13. The method according to any one of claims 1 to 12, wherein the first request further comprises a service identifier corresponding to the first service.

14. The method according to any one of claims 1 to 13, wherein sending the first request comprises:
sending the first request to a second network element via a first network element.

15. The method according to any one of claims 1 to 14, further comprising:
receiving a first message or a second message;
wherein the first message indicates at least one of: replacement of a QoS profile, a replaced QoS profile, or a QoS flow identifier (QFI);
the second message indicates at least one of: a QFI, or a transmission resource of an access network device being unable to satisfy a QoS requirement corresponding to the first QoS profile, the second QoS profile, the first alternative QoS profile, or the second alternative QoS profile.

16. A communication method, executed by a second network element, comprising:
receiving a first request, wherein the first request is configured to request a session resource for a first service; the first request comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

17. The method according to claim 16, further comprising:
determining a first rule based on the first request, wherein the first rule comprises at least one of: the first indication, the first information, the second information, at least one first alternative QoS profile, the third information, at least one second alternative QoS profile, or the fourth information; and
sending the first rule to a third network element.

18. The method according to claim 16 or 17, further comprising:
receiving a first message or a second message, wherein the first message indicates at least one of: replacement of a QoS profile, a replaced QoS profile, or a QoS flow identifier (QFI); and the second message indicates at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to an application function (AF).

19. A communication method, executed by a third network element, comprising:
receiving a first rule, wherein the first rule comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

20. The method according to claim 19, further comprising:
determining a second rule based on the first rule, wherein the second rule comprises at least one of: the first indication, the first information, the second information, at least one first alternative QoS profile, the third information, at least one second alternative QoS profile, or the fourth information; and
sending the second rule to an access network device.

21. The method according to claim 19 or 20, further comprising:
receiving a first message or a second message, wherein the first message indicates at least one of: replacement of a QoS profile, a replaced QoS profile, or a QoS flow identifier (QFI); and the second message indicates at least one of: a QFI, or a transmission resource of an access network device being unable to satisfy a QoS requirement corresponding to the first QoS profile, the second QoS profile, the first alternative QoS profile, or the second alternative QoS profile; and
sending the first message or the second message to a second network element.

22. A communication method, executed by an access network device, comprising:
receiving a second rule, wherein the second rule comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

23. The method according to claim 22, further comprising:
in response to a current transmission resource of the access network device being unable to satisfy a QoS requirement of a currently used QoS profile, selecting a target QoS profile from the first QoS profile, the second QoS profile, the at least one first alternative QoS profile, and the at least one second alternative QoS profile, wherein a QoS requirement corresponding to the target QoS profile is able to be satisfied by the current transmission resource of the access network device, and the target QoS profile has a maximum priority; and
replacing the currently used QoS profile with the target QoS profile.

24. The method according to claim 22 or 23, wherein the first indication is further configured for at least one of:
indicating a first condition, wherein the first condition is a condition that needs to be satisfied when the second QoS profile is able to replace the first QoS profile;
indicating a second condition, wherein the second condition is a condition that needs to be satisfied when the first QoS profile is able to replace the second QoS profile;
indicating a third condition, wherein the third condition is a condition that needs to be satisfied when the second alternative QoS profile is able to replace the first alternative QoS profile; or
indicating a fourth condition, wherein the fourth condition is a condition that needs to be satisfied when the first alternative QoS profile is able to replace the second alternative QoS profile.

25. The method according to claim 24, further comprising:
in response to the currently used QoS profile of the access network device being the first QoS profile, in a case that the first condition is satisfied, replacing the first QoS profile with the second QoS profile;
in response to the currently used QoS profile of the access network device being the second QoS profile, in a case that the second condition is satisfied, replacing the second QoS profile with the first QoS profile;
in response to the currently used QoS profile of the access network device being the first alternative QoS profile, in a case that the third condition is satisfied, replacing the first alternative QoS profile with the second alternative QoS profile; or
in response to the currently used QoS profile of the access network device being the second alternative QoS profile, in a case that the fourth condition is satisfied, replacing the second alternative QoS profile with the first alternative QoS profile.

26. The method according to any one of claims 22 to 25, further comprising:
sending a first message in response to the access network device performing replacement of a QoS profile, wherein the first message indicates at least one of: replacement of a QoS profile, a replaced QoS profile, or a QoS flow identifier (QFI); or
sending a second message in response to a transmission resource of the access network device being unable to satisfy a QoS requirement corresponding to the first QoS profile, the second QoS profile, the first alternative QoS profile, or the second alternative QoS profile, wherein the second message indicates at least one of: a QFI, or a transmission resource of an access network device being unable to satisfy a QoS requirement corresponding to the first QoS profile, the second QoS profile, the first alternative QoS profile, or the second alternative QoS profile.

27. A communication method, executed by a core network functional node, comprising:
receiving a first request sent by an application function (AF), wherein the first request is configured to request a session resource for a first service; the first request comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile; and
sending a second rule to an access network device based on the first request, wherein the second rule comprises at least one of: the first indication, the first information, the second information, the at least one first alternative QoS profile, the third information, the at least one second alternative QoS profile, or the fourth information.

28. The method according to claim 27, further comprising:
receiving a first message or a second message; wherein the first message indicates at least one of: replacement of a QoS profile, a replaced QoS profile, or a QoS flow identifier (QFI); and the second message indicates at least one of: a QFI, or a transmission resource of the access network device being unable to satisfy a QoS requirement corresponding to the first QoS profile, the second QoS profile, the first alternative QoS profile, or the second alternative QoS profile; and
sending the first message or the second message to the AF.

29. An application function (AF), comprising:
a sending module, configured to send a first request, wherein the first request is configured to request a session resource for a first service; the first request comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

30. A second network element, comprising:
a receiving module, configured to receive a first request, wherein the first request is configured to request a session resource for a first service; the first request comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

31. A third network element, comprising:
a receiving module, configured to receive a first rule, wherein the first rule comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

32. An access network device, comprising:
a receiving module, configured to receive a second rule, wherein the second rule comprises at least one of: first information indicating a first quality of service (QoS) profile corresponding to a protocol data unit (PDU), second information indicating a second QoS profile corresponding to a PDU set, a first indication, at least one first alternative QoS profile, third information indicating a priority of the at least one first alternative QoS profile, at least one second alternative QoS profile, or fourth information indicating a priority of the at least one second alternative QoS profile;
wherein the first alternative QoS profile is configured to replace the first QoS profile, and the second alternative QoS profile is configured to replace the second QoS profile;
the first indication is configured for at least one of:
enabling a first function, wherein the first function comprises at least one of: a PDU set extension function of the first alternative QoS profile; a support function of the second alternative QoS profile; a support function of both the first alternative QoS profile and the second alternative QoS profile; the first QoS profile and the second QoS profile being able to replace each other; or the first alternative QoS profile and the second alternative QoS profile being able to replace each other;
indicating that the second alternative QoS profile is able to replace the first alternative QoS profile;
indicating that the first alternative QoS profile is able to replace the second alternative QoS profile;
indicating that, based on respective priorities of the first QoS profile and the second QoS profile, the second QoS profile is able to replace the first QoS profile or the first QoS profile is able to replace the second QoS profile; and indicating that, based on respective priorities of the first alternative QoS profile and the second alternative QoS profile, the second alternative QoS profile is able to replace the first alternative QoS profile or the first alternative QoS profile is able to replace the second alternative QoS profile.

33. A communication device, comprising:
one or more processors;
a memory coupled to the one or more processors, wherein instructions are stored on the memory, and when the instructions are executed by the one or more processors, cause the communication device to execute the method according to any one of claims 1 to 15.

34. A communication device, comprising:
one or more processors;
a memory coupled to the one or more processors, wherein instructions are stored on the memory, and when the instructions are executed by the one or more processors, cause the communication device to execute the method according to any one of claims 16 to 18.

35. A communication device, comprising:
one or more processors;
a memory coupled to the one or more processors, wherein instructions are stored on the memory, and when the instructions are executed by the one or more processors, cause the communication device to execute the method according to any one of claims 19 to 21.

36. A communication device, comprising:
one or more processors;
a memory coupled to the one or more processors, wherein instructions are stored on the memory, and when the instructions are executed by the one or more processors, cause the communication device to execute the method according to any one of claims 22 to 26.

37. A communication system, comprising an application function (AF), configured to implement the method according to any one of claims 1 to 15, a second network element, configured to implement the method according to any one of claims 16 to 18, a third network element, configured to implement the method according to any one of claims 19 to 21, and an access network device, configured to implement the method according to any one of claims 22 to 26.

38. A storage medium storing instructions, wherein the instructions, when run on a communication device, cause the communication device to execute the method according to any one of claims 1 to 15, or to execute the method according to any one of claims 16 to 18, or to execute the method according to any one of claims 19 to 21, or to execute the method according to any one of claims 22 to 26.

39. A storage medium storing instructions, wherein the instructions, when run on a communication device, cause the communication device to execute the method according to any one of claims 1 to 15, or to execute the method according to any one of claims 16 to 18, or to execute the method according to any one of claims 19 to 21, or to execute the method according to any one of claims 22 to 26.
